(19) Europäisches Patentamt / European Patent Office / Office européen des brevets

(11) **EP 4 183 741 A1**

(12) **EUROPEAN PATENT APPLICATION**

(43) Date of publication:
**24.05.2023 Bulletin 2023/21**

(21) Application number: **21315246.5**

(22) Date of filing: **23.11.2021**

(51) International Patent Classification (IPC):
**C01B 3/04** *(2006.01)*   **B01J 8/18** *(2006.01)*
**B01J 8/26** *(2006.01)*   **C01B 17/04** *(2006.01)*
**C25B 11/093** *(2021.01)*   **B01J 6/00** *(2006.01)*

(52) Cooperative Patent Classification (CPC):
**C01B 3/04; B01J 8/1827; B01J 8/1836; B01J 8/26; B01J 8/42; C01B 17/0495;** B01J 2208/00398; B01J 2208/00415; B01J 2208/0053

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TotalEnergies OneTech**
**92400 Courbevoie (FR)**

(72) Inventors:
• **Veryasov, Gleb**
  **B-7181 Seneffe (BE)**
• **Vermeiren, Walter**
  **B-7181 Seneffe (BE)**
• **Nesterenko, Nikolai**
  **B-7181 Seneffe (BE)**

(74) Representative: **Mellet, Valérie Martine**
**Patent 42**
**5, rue Dicks**
**4081 Esch-sur-Alzette (LU)**

(54) **PROCESS FOR PRODUCTION OF HYDROGEN BY H2S SPLITTING REACTION IN A FLUIDIZED BED REACTOR**

(57) The disclosure relates to a process to perform an $H_2S$ splitting reaction , said process comprising the steps of (a) providing one fluidized bed reactor comprising two electrodes, a bed comprising particles and a $H_2S$-containing feedstock (b) putting the particles in a fluidized state to obtain a fluidized bed; (c) heating the fluidized bed to a temperature ranging from 1000°C to 2700°C; remarkable **in that** the step c) of heating is performed by passing an electric current through the fluidized bed and in that at least 10 wt.% of the particles are electrically conductive particles selected from metallic alloys, non-metallic resistors, metallic carbides, transition metal nitrides, metallic phosphides, superionic conductors, phosphate electrolytes, mixed oxides being doped with lower-valent cations, mixed sulphides being doped with lower-valent cations, and/or any mixture thereof.

EP 4 183 741 A1

**Description**

**Field of the disclosure**

The present disclosure relates to a process for performing a $H_2S$ splitting reaction in a fluidized bed reactor wherein the reaction is performed without the need of an external heating device in the said fluidized bed reactor. The present disclosure aims to contribute to the replacement of the use of fossil carbon-based fuels heating devices. The present disclosure relates to the electrification of the chemical industry.

**Technical background**

Recovery of elemental sulphur from acid gas ($H_2S$ and $CO_2$) during sour natural gas processing and refinery upgrading, is carried out on a worldwide scale using the Claus process. This process converts $H_2S$ into S and $H_2O$ using a combination of thermal and catalytic steps listed below.

$$H_2S + 3/2\ O_2 \rightarrow H_2O + SO_2 \qquad (1,\ thermal)$$

$$2H_2S + SO_2 \rightarrow 2H_2O + 3/8\ S_8 \qquad (2,\ catalytic)$$

The process is exothermic and produces some medium-pressure or high-pressure steam, which is used in the surrounding infrastructure.
Climate change and ongoing energy transition make it mandatory to electrify the industrial processes and use available energy sources and carriers more efficiently. $H_2S$ might serve as a source of hydrogen, which could be produced by the $H_2S$ splitting or cracking, according to the following equation:

$$H_2S \rightarrow H_2 + 1/2\ S_2 \qquad (3)$$

$S_2$ is a vapour form of sulphur, which exists at temperatures above 444.6°C and recombines into other forms of sulphur once it is cooled down (e.g., $S_8$).
The reaction was not yet industrialized as it is hard to achieve attractive yield of hydrogen due to several reasons: (a) it is an endothermic process, which requires input of energy, whereas existing Claus process is a source of energy for existing infrastructure; (b) it is reversible reaction, as $H_2$ could react with $S_2$, meaning that immediate separation of the products is required; (c) economic reasons - none of existing types of reactors provided satisfactory économics of the $H_2S$ splitting process.
There are literature records on attempts for development of membrane-type of reactors for $H_2S$ splitting (International Journal of Hydrogen Energy, Volume 20, Issue 1, January 1995, Pages 21-28,). Some disclosures covered integration of $H_2S$ thermal splitting with an existing infrastructure (International Journal of Hydrogen Energy, Volume 7, Issue 6, 1982, Pages 471-475; and Annual Technical Meeting of Petrochemical Society (PETSOC), Calgary, Alberta, June 1995). The present disclosure aims to provide a large-scale solution to one or more of the problems encountered in the prior art that is suitable for application in the industry, such as the chemical industry. The present disclosure aims to contribute to the electrification of industrial processes and hydrogen production. The present disclosure provides a solution to conduct a thermal splitting of $H_2S$ into hydrogen and sulphur by use of exclusively electric power.

**Summary of the disclosure**

According to a first aspect, the disclosure provides for a process to perform an $H_2S$ splitting reaction with production of hydrogen, said process comprising the steps of:

a) providing at least one fluidized bed reactor comprising at least two electrodes, a bed comprising particles and a $H_2S$-containing feedstock;
b) putting the particles of the bed in a fluidized state to obtain a fluidized bed; and
c) heating the fluidized bed to a temperature ranging from 1000°C to 2700°C to conduct the $H_2S$ splitting reaction of the $H_2S$-containing feedstock; and
d) optionally, recovering the products of the reaction;

the process is remarkable in that the step c) of heating the fluidized bed is performed by passing an electric current through the fluidized bed and in that at least 10wt.% of the particles based on the total weight of the particles of the bed are electrically conductive particles and have a resistivity ranging from 0.001 Ohm.cm to 500 Ohm.cm at 800°C; and wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof..

Surprisingly, it has been found that the use of electrically conductive particles in one or more fluidized bed reactors which are electrified, allows maintaining a temperature sufficient to carry out an $H_2S$ splitting reaction requesting high-temperature conditions such as temperature reaction ranging from 1000°C to 2700°C without the need of any external heating device. The use of at least 10 wt.% of electrically conductive particles within the particles of the bed allows minimizing the loss of heat when a voltage is applied. Thanks to the Joule effect, most, if not all, the electrical energy is transformed into heat that is used for the heating of the reactor medium.

In preferred embodiment, the electrically conductive particles are or comprise one or more non-metallic resistors.

Advantageously, the products recovered at step d) are $H_2$ and $S_2$.

In a preferred embodiment, the volumetric heat generation rate is greater than 0.1 MW/m$^3$ of fluidized bed, more preferably greater than 1 MW/m$^3$, in particular, greater than 3 MW/m$^3$.

In a preferred embodiment, the at least one fluidized bed reactor is devoid of heating means. For example, the at least one fluidized bed reactor comprises a vessel and is devoid of heating means located around or inside the vessel. For example, at least one fluidized bed reactor is devoid of heating means selected from ovens, gas burners, hot plates, or any combination thereof. For example, all the fluidized bed reactors are devoid of heating means selected from ovens, gas burners, hot plates, or any combination thereof.

For example, the content of electrically conductive particles is ranging from 10 wt.% to 100 wt.% based on the total weight of the particles of the bed; preferably, from 15 wt.% to 95 wt.%, more preferably from 20 wt.% to 90 wt.%, even more preferably from 25 wt.% to 80 wt.% and most preferably from 30 wt.% to 75 wt.%.

For example, the content of electrically conductive particles based on the total weight of the bed is at least 12 wt.% based on the total weight of the particles of the bed; preferably, at least 15 wt.%, more preferably, at least 20 wt.%; even more preferably at least 25 wt.%, and most preferably at least 30 wt.% or at least 40 wt.% or at least 50 wt.% or at least 60 wt.%.

For example, the electrically conductive particles have a resistivity ranging from 0.005 to 400 Ohm.cm at 800°C, preferably ranging from 0.01 to 300 Ohm.cm at 800°C; more preferably ranging from 0.05 to 150 Ohm.cm at 800°C and most preferably ranging from 0.1 to 100 Ohm.cm at 800°C

For example, the electrically conductive particles have a resistivity of at least 0.005 Ohm.cm at 800°C; preferably of at least 0.01 Ohm.cm at 800°C, more preferably of at least 0.05 Ohm.cm at 800°C; even more preferably of at least 0.1 Ohm.cm at 800°C, and most preferably of at least 0.5 Ohm.cm at 800°C.

For example, the electrically conductive particles have a resistivity of at most 400 Ohm.cm at 800°C; preferably of at most 300 Ohm.cm at 800°C, more preferably of at most 200 Ohm.cm at 800°C; even more preferably of at most 150 Ohm.cm at 800°C, and most preferably of at most 100 Ohm.cm at 800°C.The selection of the content of electrically conductive particles based on the total weight of the particles of the bed and of the electrically conductive particles of a given resistivity influence the temperature reached by the fluidized bed. Thus, in case the targeted temperature is not attained, the person skilled in the art may increase the density of the bed of particles, the content of electrically conductive particles based on the total weight of the particles of the bed and/or select electrically conductive particles with a lower resistivity to increase the temperature reach by the fluidized bed.

For example, the density of the bed of particles is expressed as the void fraction. Void fraction or bed porosity is the volume of voids between the particles divided by the total volume of the bed. At the incipient fluidisation velocity, the void fraction is typically between 0.4 and 0.5. The void fraction can increase up to 0.98 in fast fluidised beds with lower values at the bottom of about 0.5 and higher than 0.9 at the top of the bed. The void fraction can be controlled by the linear velocity of the fluidising gas and can be decreased by recycling solid particles that are recovered at the top and sent back to the bottom of the fluidized bed, which compensates for the entrainment of solid particles out of the bed.

The void fraction VF is defined as the volume fraction of voids in a bed of particles and is determined according to the following equation:

$$VF = \frac{Vt - Vp}{Vt} \quad (1)$$

wherein Vt is the total volume of the bed and is determined by

$$Vt = AH \quad (2)$$

wherein A is the cross-sectional area of the fluidized bed and H is the height of the fluidized bed; and
wherein Vp is the total volume of particles within the fluidized bed.

For example, the void fraction of the bed is ranging from 0.5 to 0.8; preferably ranging from 0.5 to 0.7, more preferably from 0.5 to 0.6. To increase the density of the bed of particles, the void fraction is to be reduced.

For example, the particles of the bed have an average particle size ranging from 5 to 300 $\mu$m as determined by sieving according to ASTM D4513-11, preferably ranging from 10 to 200 $\mu$m and more preferably ranging from 20 to 200 $\mu$m or from 30 to 150 $\mu$m.

Determination by sieving according to ASTM D4513-11 is preferred. In case the particles have an average size of below 20 $\mu$m the determination of the average size can also be done by Laser Light Scattering according to ASTM D4464-15.

For example, the electrically conductive particles of the bed have an average particle size ranging from 5 to 300 $\mu$m as determined by sieving according to ASTM D4513-11, preferably ranging from 10 to 200 $\mu$m and more preferably ranging from 30 to 150 $\mu$m.

In an embodiment, from 50 wt.% to 100 wt.% of the electrically conductive particles of the bed based on the total weight of the electrically conductive particles of the bed are one or more non-metallic resistors; preferably, from 60 wt.% to 100 wt.%; more preferably from 70 wt.% to 100 wt.%; even more preferably from 80 wt.% to 100 wt.% and most preferably from 90 wt.% to 100 wt.%.

In an embodiment, the electrically conductive particles of the bed comprise one or more metallic alloys. For example, said one or more **metallic alloys** are selected from Ni-Cr, Fe-Ni-Cr, Fe-Ni-Al or a mixture thereof. With preference, when said metallic alloy comprises at least chromium, the chromium content is at least 15 mol.% of the total molar content of said metallic alloy comprising at least chromium, more preferably at least 20 mol.%, even more preferably at least 25 mol.%, most preferably at least 30 mol.%. Advantageously yet, the iron content in the metallic alloys is at most 2.0% based on the total molar content of the said metallic alloy, preferably at most 1.5 mol.%, more preferably at most 1.0 mol.%, even more preferably at most 0.5 mol.%.

For example, a **non-metallic resistor** is silicon carbide (SiC), molybdenum disilicide (MoSi$_2$), nickel silicide (NiSi), sodium silicide (Na$_2$Si), magnesium silicide (Mg$_2$Si), platinum silicide (PtSi), titanium silicide (TiSi$_2$), tungsten silicide (WSi$_2$) or a mixture thereof, preferably silicon carbide.

For example, said one or more **metallic carbides** are selected from iron carbide (Fe$_3$C) and/or molybdenum carbide (such as a mixture of MoC and Mo$_2$C).

For example, said one or more **transition metal nitrides** are selected from zirconium nitride (ZrN), tungsten nitride (such as a mixture of W$_2$N, WN, and WN2), vanadium nitride (VN), tantalum nitride (TaN), and/or niobium nitride (NbN).

For example, said one or more **metallic phosphides** are selected from copper phosphide (Cu$_3$P), indium phosphide (InP), gallium phosphide (GaP), sodium phosphide Na$_3$P), aluminium phosphide (AlP), zinc phosphide (Zn$_3$P$_2$) and/or calcium phosphide (Ca$_3$P$_2$).

In an embodiment, the electrically conductive particles of the bed comprise one or more superionic conductors. For example, said one or more **superionic conductors** are selected from LiAlSiO$_4$, Li$_{10}$GeP$_2$S$_{12}$, Li$_{3.6}$Si$_{0.6}$P$_{0.4}$O$_4$, sodium superionic conductors (NaSICON), such as Na$_3$Zr$_2$PSi$_2$O$_{12}$, or sodium beta alumina, such as NaAl$_{11}$O$_{17}$, Na$_{1.6}$Al$_{11}$O$_{17.3}$, and/or Na$_{1.76}$Li$_{0.38}$Al$_{10.62}$O$_{17}$.

For example, said one or more **phosphate electrolytes** are selected from LiPO$_4$ or LaPO$_4$.

For example, said one or more **mixed oxides** are ionic or mixed conductors being doped with one or more lower-valent cations. Advantageously, said mixed oxides are doped with one or more lower-valent cations, and are selected from oxides having a cubic fluorite structure, perovskite, pyrochlore.

For example, said one or more **mixed sulphides** are ionic or mixed conductors being doped with one or more lower-valent cations.

For example, the electrically conductive particles of the bed are or comprise a non-metallic resistor being silicon carbide.

For example, the electrically conductive particles of the bed are or comprise a mixture of a non-metallic resistor being silicon carbide and electrically conductive particles different from silicon carbide. The presence of electrically conductive particles different from silicon carbide in the bed is optional. It can be present as a starting material for heating the bed since it was found that the resistivity of silicon carbide at room temperature is too high to start heating the bed. Alternatively to the presence of electrically conductive particles different from silicon carbide, it is possible to provide heat to the reactor for a defined time to start the reaction.

For example, the silicon carbide is selected from sintered silicon carbide, nitride-bounded silicon carbide, recrystallised silicon carbide, reaction bonded silicon carbide and any mixture thereof.

For example, the electrically conductive particles of the bed are or comprise a mixture of a non-metallic resistor being silicon carbide and electrically conductive particles different from silicon carbide and the electrically conductive particles of the bed comprises from 10 wt.% to 99 wt.% of silicon carbide based on the total weight of the electrically conductive particles of the bed; preferably, from 15 wt.% to 95 wt.%, more preferably from 20 wt.% to 90 wt.%, even more preferably from 25 wt.% to 80 wt.% and most preferably from 30 wt.% to 75 wt.%.

For example, the electrically conductive particles of the bed are or comprise a mixture of a non-metallic resistor being silicon carbide and electrically conductive particles different from silicon carbide and the said electrically conductive particles different from silicon carbide are or comprise one or more selected from molybdenum disilicide, one or more mixed oxides being doped with one or more lower-valent cations and/or one or more mixed sulphides being doped with one or more lower-valent cations, and any mixture thereof.

For example, the electrically conductive particles of the bed are or comprise silicon carbide and molybdenum disilicide with from 10 wt.% to 90 wt.% of silicon carbide and from 90 wt.% to 10 wt.% of molybdenum disilicide, both based on the total weight of the electrically conductive particles of the bed.

For example, the electrically conductive particles of the bed are or comprise one or more mixed oxides being ionic conductor, namely being doped with one or more lower-valent cations; with preference, the mixed oxides are selected from:

- one or more oxides having a cubic fluorite structure being at least partially substituted with one or more lower-valent cations, preferentially selected from Sm, Gd, Y, Sc, Yb, Mg, Ca, La, Dy, Er, Eu; and/or
- one or more $ABO_3$-perovskites with A and B tri-valent cations, being at least partially substituted in A position with one or more lower-valent cations, preferentially selected from Ca, Sr, or Mg, and comprising at least one of Ni, Ga, Co, Cr, Mn, Sc, Fe and/or a mixture thereof in B position; and/or
- one or more $ABO_3$-perovskites with A bivalent cation and B tetra-valent cation, being at least partially substituted with one or more lower-valent cations, preferentially selected from magnesium (Mg), scandium (Sc), yttrium (Y), neodymium (Nd) or ytterbium (Yb) in the B position or with a mixture of different B elements in the B position; and/or.
- one or more $A_2B_2O_7$-pyrochlores with A trivalent cation and B tetra-valent cation being at least partially substituted in A position with one or more lower-valent cations, preferentially selected from Ca or Mg, and comprising at least one of Sn, Zr and Ti in B position.

Examples of one or more mixed sulphides are

- one or more sulphides having a cubic fluorite structure being at least partially substituted with one or more lower-valent cations, preferentially selected from Sm, Gd, Y, Sc, Yb, Mg, Ca, La, Dy, Er, Eu; and/or
- one or more $ABS_3$ structures with A and B tri-valent cations being at least partially substituted in A position with one or more lower-valent cations, preferably selected from Ca, Sr, or Mg and comprising at least one of Ni, Ga, Co, Cr, Mn, Sc, Fe and/or a mixture thereof in B position; and/or
- one or more $ABS_3$ structures with A bi-valent cation and B tetra-valent cation, being at least partially substituted with one or more lower-valent cations, preferably selected from Mg, Sc, Y, Nd or Yb in the B position or with a mixture of different B elements in the B position; and/or
- one or more $A_2B_2S_7$ structures with A tri-valent cation and B tetra-valent cation, being at least partially substituted in A position with one or more lower-valent cations, preferably selected from Ca or Mg, and comprising at least one of Sn, Zr and Ti in B position.

With preference, the degree of substitution in the one or more mixed oxides doped with one or more lower-valent cations and having a cubic fluorite structure is between 1 and 15 atom% based on the total number of atoms present in the one or more oxides having a cubic fluorite structure, preferably between 3 and 12 atom%, more preferably between 5 and 10 atom%.

With preference, the degree of substitution in the one or more mixed oxides doped with one or more lower-valent cations is between 1 and 50 atom% based on the total number of atoms present in the one or more $ABO_3$-perovskites with A and B tri-valent cations, in the one or more $ABO_3$-perovskites with A bivalent cation and B tetra-valent cation or in the one or more $A_2B_2O_7$-pyrochlores with A trivalent cation and B tetra-valent cation respectively, preferably between 3 and 20 atom%, more preferably between 5 and 15 atom%.

With preference, the degree of substitution in the one or more mixed sulphides doped with one or more lower-valent cations and having a cubic fluorite structure is between 1 and 15 atom% based on the total number of atoms present in the one or more oxides having a cubic fluorite structure, preferably between 3 and 12 atom%, more preferably between 5 and 10 atom%.

With preference, the degree of substitution in the one or more mixed sulphides doped with one or more lower-valent cations is between 1 and 50 atom% based on the total number of atoms present in the one or more $ABS_3$ structures with A and B tri-valent cations, in the one or more $ABS_3$ structures with A bivalent cation and B tetra-valent cation or in the one or more $A_2B_2S_7$ structures with A trivalent cation and B tetra-valent cation respectively, preferably between 3 and 20 atom%, more preferably between 5 and 15 atom%.

For example, the electrically conductive particles of the bed are or comprise one or more metallic alloys; with preference, one or more metallic alloys are selected from Ni-Cr, Fe-Ni-Cr, Fe-Ni-Al or a mixture thereof.

With preference, when said metallic alloy comprises at least chromium, the chromium content is at least 15 mol.% of the total molar content of said metallic alloy comprising at least chromium, more preferably at least 20 mol.%, even more preferably at least 25 mol.%, most preferably at least 30 mol.%. Advantageously yet, the iron content in the metallic alloys is at most 2.0 mol.% based on the total molar content of said metallic alloy, preferably at most 1.5 mol.%, more preferably at most 1.0 mol.%, even more preferably at most 0.5 mol.%.

For example, the electrically conductive particles of the bed are or comprise a mixture of a non-metallic resistor being silicon carbide and particles different from silicon carbide wherein the particles different from silicon carbide are or comprise molybdenum silicide; with preference, said molybdenum silicide is molybdenum silicide particles having an average particle size ranging from 5 to 300 $\mu$m as determined by sieving according to ASTM D4513-11, more preferably ranging from 10 to 200 $\mu$m and most preferably ranging from 30 to 150 $\mu$m.

For example, the $H_2S$ splitting reaction is conducted at a temperature ranging from 1000°C to 2700 °C, preferably from 1100°C to 2500°C, more preferably from 1200°C to 2500°C and most preferably from 1300°C to 2200°C.

For example, the $H_2S$ splitting reaction is performed at a pressure ranging between 0.1 MPa and 3.0 MPa, preferably between 0.2 MPa and 2.0 MPa.

In an embodiment, said process comprises a step of pre-heating with a gaseous stream the one or more fluidized bed reactors before conducting the $H_2S$ splitting reaction in the fluidized bed reactor; with preference the gaseous stream has a temperature comprised between 400°C and 1500°C; preferably, from 400°C to 1000°C; more preferably from 500 °C to 950 °C; even more preferably, from 600 °C to 900°C; most preferably from 700°C to 1000°C or from 800°C to 1200°C. The said embodiment is of interest when the particles of the bed such as molybdenum carbide and/or the electro-resistive material have too high resistivity at room temperature to start the electro-heating of the bed. In an embodiment, the gaseous stream is a stream of inert gas.

For example, the $H_2S$-containing feedstock is selected from an effluent of amine wash from natural gas sweetening process and/or a stream from cold low-pressure separator after hydrotreatment unit on a refinery.

For example, in step b) the particles of the bed are put in a fluidized state by passing upwardly through the said bed a gaseous stream; with preference the gaseous stream is or comprises the $H_2S$-containing feedstock.

In a preferred embodiment, the outlet temperature of the reactor may range from 500 to 2000°C, preferably from 700 to 1400°C, more preferably from 750 to 1300°C, more preferably from 800°C to 1200°C.

In a preferred embodiment, the residence time of the feedstock in the fluidised bed section of the reactor where the temperature is between 1200 and 2500°C, may range from 0.01 to 5.00 seconds, preferably from 0.10 to 1.20 seconds.

For example, the step of heating the fluidized bed is performed by passing an electric current at a voltage of at most 300 V through the fluidized bed, preferably at most 200 V, more preferably at most 150 V, even more preferably at most 120 V, most preferably at most 100 V, even most preferably at most 90 V.

For example, said process comprises a step of pre-heating with a gaseous stream said fluidized bed reactor before conducting said $H_2S$ splitting reaction in the fluidized bed reactor; with preference, said gaseous stream has a temperature comprised between 400°C and 1500°C.

For example, the at least one fluidized bed reactor provided in step a) comprises a heating zone and a reaction zone and the step c) of heating the fluidized bed to a temperature ranging from 1000°C to 2700°C to conduct the $H_2S$ splitting reaction comprises the following sub-steps:

- heating the fluidized bed to a temperature ranging from 1000°C to 2700°C by passing an electric current through the heating zone of the at least one fluidized bed,
- transporting the heated particles from the heating zone to the reaction zone,
- in the reaction zone, putting the heated particles in a fluidized state by passing upwardly through the said bed of the reaction zone a stream comprising a $H_2S$-containing feedstock to obtain a fluidized bed and to conduct the $H_2S$ splitting reaction,
- optionally, recovering the particles from the reaction zone and recycling them to the heating zone.

For example, in step b) the particles of the bed are put in a fluidized state by passing upwardly through the said bed a gaseous stream wherein the gaseous stream is provided to the heating zone. For example, the gaseous stream used in step b) has a temperature ranging from 400°C and 1000°C; preferably, from 500 °C to 950 °C; more preferably, from 600 °C to 900°C; even more preferably from 700°C to 1000°C or from 800°C to 1000°C.

For example, the at least one fluidized bed reactor provided in step a) comprises a heating zone and a reaction zone and the step c) of heating the fluidized bed to a temperature ranging from 1000°C to 2700°C to conduct the $H_2S$ splitting reaction comprises the following sub-steps:

- pre-heating the fluidized bed to ranging from 400°C and 1000°C by passing upwardly through the particles bed a gaseous stream having a temperature ranging from 400°C and 1000°C; with preference, the gaseous stream is or comprises one or more diluent gas;
- heating the fluidized bed to a temperature ranging from 1000°C to 2700°C by passing an electric current through the heating zone,
- transporting the heated particles from the heating zone to the reaction zone,
- in the reaction zone, putting the heated particles in a fluidized state by passing upwardly through the said bed of the reaction zone a stream comprising a $H_2S$ feedstock to obtain a fluidized bed and to conduct the $H_2S$ splitting reaction,
- optionally, recovering the particles from the reaction zone and recycling them to the heating zone.

For example, the gaseous stream used has a temperature ranging from 400°C and 1000°C; preferably, from 500 °C to 950 °C; more preferably, from 600 °C to 900°C; even more preferably from 700°C to 1000°C or from 800°C to 1000°C. In an embodiment, the tat least one fluidized bed reactor provided in step a) comprises a pre-heating zone to for pre-heating the bed particles.

Thus, preferably, the particles are pre-heated and/or heated before step c) in a pre-heating zone and/or in a heating zone, so that:

- the at least one fluidized bed reactor provided in step a) comprises a pre-heating zone wherein the step of pre-heating is performed by passing upwardly through the said bed a gaseous stream wherein the gaseous stream is provided to the pre-heating zone and wherein the gaseous stream used has a temperature ranging from 400°C and 1000°C; and/or
- the at least one fluidized bed reactor provided in step a) comprises a heating zone and a reaction zone, wherein the particles of the bed are put in a fluidized state in the heating zone by passing upwardly through the said bed a gaseous stream having a temperature ranging from 400°C and 1000°C, and wherein the fluidized bed is further heated to a temperature ranging from 1000°C to 2700°C by passing an electric current through the heating zone.

Step c) provides that the $H_2S$ splitting reaction is performed on an $H_2S$-comprising feedstock which implies that a said feedstock is provided.

For example, wherein the heating zone and the reaction zone are mixed (i.e. the same zone); the stream provided in step b) comprises an H2S-containing feedstock. For example, wherein the heating zone and the reaction zone are separated zones, the stream provided to the heating zone is devoid of H2S-containing feedstock.

For example, wherein the process comprises providing at least one fluidized bed reactor being a heating zone and at least one fluidized bed reactor being a reaction zone, the stream provided to the heating zone is devoid of an $H_2S$-containing feedstock and the reaction $H_2S$-containing feedstock is provided to the reaction zone only.

It is understood that the $H_2S$-containing feedstock is provided to the reaction zone and that when the heating zone is separated from the reaction zone, no $H_2S$-containing feedstock is provided to the heating zone. In an embodiment, steam is provided to the reaction zone. in addition to the $H_2S$-containing feedstock.

According to a second aspect, the disclosure provides an installation to perform an $H_2S$ splitting reaction with production of $H_2$, according to the first aspect, said installation comprises at least one fluidized bed reactor comprising:

- at least two electrodes; with preference, one electrode is a submerged central electrode or two electrodes are submerged electrodes,
- a reactor vessel;
- one or more fluid nozzles for the introduction of an $H_2S$-containing feedstock and an optional further gaseous stream within at least one fluidized bed reactor; and
- a bed comprising particles;

the installation is **remarkable in that** at least 10 wt.% of the particles of the bed based on the total weight of the particle of the bed are electrically conductive and have a resistivity ranging from 0.001 Ohm.cm to 500 Ohm.cm at a temperature of 800°C; wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof; and in that the at least two electrodes comprise or are made of tantalum.

Advantageously, at least one fluidized bed reactor is devoid of heating means. For example, at least one fluidized bed reactor is devoid of heating means located around or inside the reactor vessel. For example, all the fluidized bed reactors are devoid of heating means. When stating that at least one of the fluidized bed reactors is devoid of "heating means", it refers to "classical' heating means, such as ovens, gas burners, hot plates and the like. There are no other heating means than the at least two electrodes of the fluidized bed reactor itself. For example, at least one fluidized bed reactor is devoid of heating means selected from ovens, gas burners, hot plates, or any combination thereof. For example, all the fluidized bed reactors are devoid of heating means selected from ovens, gas burners, hot plates, or any combination thereof.

In a preferred embodiment, the at least one fluidized bed reactor comprising at least two electrodes and a bed comprising particles is devoid of packing.

For example, the gaseous stream is a fluidizing gas and is or comprises one or more diluent gases.

For example, the at least one reactor vessel has an inner diameter of at least 100 cm, preferably at least 200 cm, more preferably at least 300 cm.

With preference, the reactor vessel comprises a reactor wall made of materials that are corrosion-resistant materials and advantageously said reactor wall materials comprise nickel (Ni), SiAlON ceramics, yttria-stabilized zirconia (YSZ), tetragonal polycrystalline zirconia (TZP) and/or tetragonal zirconia polycrystal (TPZ).

With preference, one of the electrodes is the reactor vessel or the gas distributor and/or said at least two electrodes are made in stainless steel material or nickel-chromium alloys or nickel-chromium-iron alloys.

For example, the at least one fluidized bed reactor comprises a heating zone and a reaction zone, one or more fluid nozzles to provide an $H_2S$-containing feedstock to the reaction zone, and optional means to transport the particles of the bed from the reaction zone back to the heating zone.

For example, the installation comprises at least two fluidized bed reactors connected one to each other wherein at least one reactor of said at least two fluidized bed reactors is the heating zone and at least another reactor of said at least two fluidized bed reactors is the reaction zone. With preference, the installation comprises one or more fluid nozzles arranged to inject an $H_2S$-containing feedstock to the at least one fluidized bed reactor being the reaction zone, means to transport the particles of the bed from the heating zone to the reaction zone when necessary and optional means to transport the particles from the reaction zone back to the heating zone. This configuration is remarkable in that a given particle bed is common to at least two fluidized bed reactors.

For example, the at least one fluidized bed reactor is a single fluidized bed reactor wherein the heating zone is the bottom part of the fluidized bed reactor while the reaction zone is the top part of the fluidised bed reactor. With preference, the installation comprises one or more fluid nozzles to inject an $H_2S$-containing feedstock between the two zones. The diameter of the heating zone and reaction zone can be different to accomplish optimum conditions for heating in the bottom zone and optimum conditions for methane conversion in the top zone. Particles can move from the heating zone to the reaction zone by entrainment and the other way around from the reaction zone back to the heating zone by gravity. Optionally, particles can be collected from the upper heating zone and transferred by a separate transfer line back to the bottom heating zone.

For example, the at least one fluidized bed comprises at least two lateral zones being an outer zone and an inner zone wherein the outer zone is surrounding the inner zone, with the outer zone being the heating zone and the inner zone being the reaction zone. In a less preferred configuration, the outer zone is the reaction zone and the inner zone is the heating zone. With preference, the installation comprises one or more fluid nozzles to inject an $H_2S$-containing feedstock in the reaction zone.

According to a third aspect, the disclosure provides the use of a bed comprising particles in at least one fluidized bed reactor to perform a process of $H_2S$ splitting with production of $H_2$ according to the first aspect, the use is remarkable in that at least 10 wt.% of the particles of the bed based on the total weight of the particles of the bed are electrically conductive, have a resistivity ranging from 0.001 Ohm.cm to 500 Ohm.cm at a temperature of 800°C and wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof.

For example, the use comprises heating the bed comprising particles to a temperature ranging from 400°C to 1000°C in a first reactor with a gaseous stream and then at a temperature ranging from 1000°C to 2700°C by passing an electric current through the fluidized bed, transporting the heated particle bed from the first reactor to a second reactor and providing an $H_2S$-containing feedstock to the second reactor; with preference, at least the second reactor is a fluidized bed reactor and/or at least the second reactor is devoid of heating means; more preferably, the first reactor and the second reactor are fluidized bed reactors and/or the first and the second reactor are devoid of heating means. For example, the second reactor is devoid of electrodes.

According to a fourth aspect, the disclosure provides the use of an installation comprising at least one fluidized bed reactor to perform an $H_2S$ splitting reaction, remarkable in that the installation is according to the second aspect. With preference, the use of an installation at least one fluidized bed reactor to perform an $H_2S$ splitting reaction in a process according to the first aspect.

The particular features, structures, characteristics or embodiments may be combined in any suitable manner, as would be apparent to a person skilled in the art from this disclosure, in one or more embodiments.

**Description of the figures**

- Figure 1 illustrates an installation according to the prior art.
- Figure 2 illustrates an installation according to the disclosure with one reactor wherein the heating zone and reaction zone are the same.
- Figure 3 illustrates an installation according to the disclosure with one reactor wherein the heating zone and reaction zone are arranged one above the other.
- Figure 4 illustrates an installation according to the disclosure with one reactor wherein the heating zone and reaction zone are arranged one lateral to the other.
- Figure 5 illustrates an installation according to the disclosure with two reactors.
- Figure 6 illustrates product distribution of $H_2S$ splitting reaction at different temperatures.

**Detailed description**

For the disclosure, the following definitions are given:
The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (e.g., from 1.0 to 5.0 includes both 1.0 and 5.0). Any numerical range recited herein is intended to include all sub-ranges subsumed therein.

The present disclosure provides a process to perform an $H_2S$ splitting reaction with production of $H_2$, said process comprising the steps of:

a) providing at least one fluidized bed reactor comprising at least two electrodes, a bed comprising particles and a $H_2S$-containing feedstock;
b) putting the particles of the bed in a fluidized state to obtain a fluidized bed;
c) heating the fluidized bed to a temperature ranging from 1000°C to 2700°C to conduct the $H_2S$ splitting reaction on the $H_2S$-containing feedstock; and
d) optionally, recovering the cracking products of the reaction;

the process is remarkable in that the step c) of heating the fluidized bed is performed by passing an electric current through the fluidized bed and in that at least 10 wt.% of the particles based on the total weight of the particles of the bed are electrically conductive and and wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof.

The step b) of putting the particles of the bed in a fluidized state is preferably performed by passing upwardly through the said bed a gaseous stream to obtain a fluidized bed.

In an embodiment the gaseous stream used in step d) comprises from one or more inert gas and/or the $H_2S$-containing feedstock. The $H_2S$-containing feedstock is a gaseous stream and may be used as fluidizing gaseous stream.

For example, the step of heating the fluidized bed is performed by passing an electric current at a voltage of at most 300 V through the fluidized bed, preferably at most 200 V, more preferably at most 150 V, even more preferably at most 120 V, most preferably at most 100 V, even most preferably at most 90 V.

The solid particulate material in the fluidized bed reactor is typically supported by a porous plate, a perforated plate, a plate with nozzles or chimneys, known as a distributor. The fluid is then forced through the distributor up and travelling through the voids between the solid particulate material. At lower fluid velocities, the solids remain settled as the fluid passes through the voids in the material, known as a packed bed reactor. As the fluid velocity is increased, the particulate solids will reach a stage where the force of the fluid on the solids is enough to counterbalance the weight of the solid particulate material. This stage is known as incipient fluidization and occurs at this minimum fluidization velocity. Once this minimum velocity is surpassed, the contents of the reactor bed begin to expand and become fluidized. Depending on the operating conditions and properties of the solid phase various flow regimes can be observed in such reactors. The minimum fluidization velocity needed to achieve bed expansion depends upon the size, shape, porosity and density of the particles and the density and viscosity of the upflowing fluid.

P.R. Gunjal, V.V. Ranade, in Industrial Catalytic Processes for Fine and Specialty Chemicals, (2016) reads that four different categories of fluidization based on the mean particle have been differentiated by Geldart that determine the fluidization regimes:

- type A, aeratable fluidization (medium size, medium-density particles which are easier to fluidize; Particles of typically 30-100 $\mu$m , density ~ 1500 kg/m$^3$);
- type B, sand-like fluidization (heavier particles which are difficult to fluidize; Particles of typically 100-800 $\mu$m, density between 1500 and 4000 kg/m$^3$);
- type C, cohesive fluidization (typical powder-like solid particle fluidization; Fine-size particles (~ 20 $\mu$m) with a dominance of intraparticle or cohesive forces); and
- type D, spoutable fluidization (large density and larger particle ~ 1-4 mm, dense and spoutable).

Fluidization may be broadly classified into two regimes (Fluid Bed Technology in Materials Processing, 1999 by CRC Press): homogeneous fluidization and heterogeneous fluidization. In homogeneous or particulate fluidization, particles are fluidized uniformly without any distinct voids. In heterogeneous or bubbling fluidization, gas bubbles devoid of solids are distinctly observable. These voids behave like bubbles in gas-liquid flows and exchange gas with the surrounding homogeneous medium with a change in size and shape while rising in the medium. In particulate fluidization, the bed expands smoothly with substantial particle movement and the bed surface is well defined. Particulate fluidization is observed only for Geldart-A type particles. A bubbling fluidization regime is observed at much higher velocities than homogeneous fluidization, in which distinguishable gas bubbles grow from the distributor, may coalesce with other bubbles and eventually burst at the surface of the bed. These bubbles intensify the mixing of solids and gases and bubble sizes tend to increase further with a rise in fluidization velocity. A slugging regime is observed when the bubble diameter increases up to the reactor diameter. In a turbulent regime, bubbles grow and start breaking up with the expansion of the bed. Under these conditions, the top surface of the bed is no longer distinguishable. In fast fluidization or pneumatic fluidization, particles are transported out of the bed and need to be recycled back into the reactor. No distinct bed surface is observed.

Fluidized bed reactors have the following advantages:
Uniform Particle Mixing: Due to the intrinsic fluid-like behaviour of the solid particulate material, fluidized beds do not experience poor mixing as in packed beds. The elimination of radial and axial concentration gradients also allows for better fluid-solid contact, which is essential for reaction efficiency and quality.

Uniform Temperature Gradients: Many chemical reactions require the addition or removal of heat. Local hot or cold spots within the reaction bed are avoided in a fluidized situation.

Ability to Operate the Reactor Continuously: The fluidized bed nature of these reactors allows for the ability to continuously withdraw products and introduce new reactants into the reaction vessel. On top of continuous operation of the chemical reactions, the fluidized bed allows also to continuously or at given frequency withdraw solid material or add continuously or at given frequency new fresh solid material thanks to the flowable solid particulate material.

Heat can be produced by passing an electrical current through a conducting material that has sufficiently high resistivity (the resistor) to transform electricity into heat. Electrical resistivity (also called specific electrical resistance or volume resistivity, is an intrinsic property independent of shape and size) and its inverse, electrical conductivity, is a fundamental property of a material that quantifies how strongly it resists or conducts electric current (SI unit of electrical resistivity is the ohm-meter ($\Omega \cdot$m) and for conductivity Siemens per meter (S/m)).

When electricity is passed through a fixed bed of electrically conducting particulate solids, having a sufficient resistivity, the bed offers resistance to the flow of current; this resistance depends on many parameters, including the nature of the solid, the nature of the linkages among the particles within the bed, the bed voidage, the bed height, the electrode geometry, etc. If the same fixed bed is fluidized by passing gas, the resistance of the bed increases; the resistance offered by the conducting particles generates heat within the bed and can maintain the bed in isothermal conditions (termed an electrothermal fluidized bed or electrofluid reactor). In many high-temperature reactions, electrofluid reactors offer in situ heating during the reaction and are particularly useful for operating endothermic reactions and hence save energy because no external heating or transfer of heat is required. It is a prerequisite that at least part of the solid particulate material is electrically conducting but non-conducting solid particulates can be mixed and still result in enough heat generation. Such non-conducting or very high resistivity solids can play a catalytic role in the chemical conversion. The characteristics of the bed material determine the resistance of an electrothermal fluidized bed furnace; as this is a charge resistor type of heat generation, the specific resistivity of the particles affects the bed resistance. The size, shape, composition, and size distribution of the particles also influence the magnitude of the bed resistance. Also, when the bed is fluidized, the voids generated between the particles increases the bed resistance. The total resistance of the bed is the sum of two components, e.g., the electrode contact-resistance (i.e., the resistance between the electrode and the bed) and the bed resistance. A large contact-resistance will cause extensive local heating in the vicinity of the electrode while the rest of the bed stays rather cool. The following factors determine the contact-resistance: current density, fluidization velocity, type of bed material, electrode size and the type of material used for the electrodes. The electrode compositions can be advantageously metallic like iron, cast iron or other steel alloys, copper or a copper-based alloy, nickel or a nickel-based alloy or refractory like metal, intermetallics or an alloy of Zr, Hf, V, Nb, Ta, Cr, Mo, W or ceramic-like carbides, or nitrides. The area of contact between the bed material and the electrodes can be adjusted, depending on the electrode submergence and the amount of particulate material in the fluidized bed. Hence, the electrical resistance and the power level can be manipulated by adjusting these variables. Advantageously, to prevent overheating of the electrodes compared to the fluidised bed, the resistivity of the electrode should be lower (and hence the joule heating) than of the particulate material of the fluidized bed. In a preferred embodiment, the electrodes can be cooled by passing a colder fluid inside or outside the electrodes. Such fluids can be any liquid that vaporises upon a heating, gaseous stream or can be a part of the colder feedstock that first cools the electrode before entering the fluidised bed.

Bed resistance can be predicted by the ohmic law. The mechanism of current transfer in fluidized beds is believed to occur through current flow along continuous chains of conducting particles at low operating voltages. At high voltages, a current transfer occurs through a combination of chains of conducting particles and arcing between the electrode and the bed as well as particle-to-particle arcing that might ionize the gas, thereby bringing down the bed resistance. Arcing inside the bed, in principle, is not desirable as it would lower the electrical and thermal efficiency. The gas velocity impacts strongly the bed resistance, a sharp increase in resistance from the settled bed onward when the gas flow rate is increased; a maximum occurred close to the incipient fluidization velocity, followed by a decrease at higher velocities. At gas flow rates sufficient to initiate slugging, the resistance again increased. Average particle size and shape impact resistance as they influence the contacts points between particles. In general, the bed resistivity increases 2 to 5 times from a settled bed (e.g. 20 Ohm.cm for graphite) to the incipient fluidisation (60 Ohm.cm for graphite) and 10 to 40 times from a settled bed to twice (300 Ohm.cm for graphite) the incipient fluidisation velocity. Non or less-conducting particles can be added to conducting particles. If the conducting solid fraction is small, the resistivity of the bed would increase due to the breaking of the linkages in the chain of conducting solids between the electrodes. If the non-conducting solid fraction is finer in size, it would fill up the interstitial gaps or voidage of the larger conducting solids and hence increase the resistance of the bed.

In general, for a desired high heating power, a high current at a low voltage is preferred. The power source can be either AC or DC. Voltages applied in an electrothermal fluidized bed are typically below 100 V to reach enough heating power. The electrothermal fluidized bed can be controlled in the following three ways:

  1. Adjusting the gas flow: Because the conductivity of the bed depends on the extent of voidage or gas bubbles inside the bed, any variation in the gas flow rate would change the power level; hence the temperature can be controlled by adjusting the fluidizing gas flow rate. The flow rate required for optimum performance corresponds to a velocity which equals or slightly exceeds the minimum fluidization velocity.

  2. Adjusting the electrode submergence: The power level can also be controlled by varying the electrode immersion level inside the bed because the conductivity of the bed is dependent on the area of contact between the conducting particles and the electrode: the surface area of the electrode available for current flow increases with electrode submergence, leading to a reduction in overall resistance.

  3. Adjusting the applied voltage: although changing the power level by using the first two methods is often more affordable or economical than increasing the applied voltage, however in electrothermal fluidized beds three variables are available to control the produced heating power.

The wall of the reactor is generally made of ceramics (like SiC), high-melting metals or alloys as it is versatile and compatible with many high-temperature reactions of industrial interest. The atmosphere for the reaction is often restricted to the neutral or the reducing type as an oxidising atmosphere can combust carbon materials or create a non-conducting metal oxide layer on top of metals or alloys. The wall and/or the distribution plate itself can act as an electrode for the reactor. The fluidized solids can be any other high-melting-point, electrically conducting particles. The other electrodes, which is usually immersed in the bed, can also be a high-melting-point metal, intermetallics or alloys.

It may be advantaged to generate the required reaction heat by heating the conductive particles in a separate zone.

In an embodiment of the present disclosure, the installation comprises of two zones arranged in series namely a first zone being a heating zone and a second zone being a reaction zone, where the conductive particles are continuously moved or transported from the first zone to the second zone and vice versa. The first and second zones can be different parts of a fluidized bed or can be located in separate fluidized beds reactors connected one to each other.

In the said embodiment, the process to perform $H_2S$ splitting reaction, said process comprising the steps of:

a) providing at least one fluidized bed reactor comprising at least two electrodes, a bed comprising particles and a $H_2S$-containing feedstock;
b) putting the particles in a fluidized state to obtain a fluidized bed;
c) heating the fluidized bed to a temperature ranging from 1000°C to 2700°C to conduct the $H_2S$ splitting reaction of the $H_2S$-containing feedstock; and
d) optionally, recovering the cracking products of the reaction;

wherein the step c) of heating the fluidized bed is performed by passing an electric current through the fluidized bed; wherein at least 10 wt.% of the particles based on the total weight of the particles of the bed are electrically conductive particles and have a resistivity ranging from 0.001 Ohm.cm to 500 Ohm.cm at 800°C; wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof; wherein the at least one fluidized bed reactor provided in step a) comprises a heating zone and a reaction zone and wherein the step c) of heating the fluidized bed to a temperature ranging from 1000°C to 2700°C to conduct the $H_2S$ splitting reaction of an $H_2S$-containing feedstock comprises the following sub-steps:

- heating the fluidized bed to a temperature ranging from 1000°C to 2700°C by passing an electric current through the heating zone of the at least one fluidized bed,
- transporting the heated particles from the heating zone to the reaction zone,
- in the reaction zone, putting the heated particles in a fluidized state by passing upwardly through the said bed of the reaction zone a stream comprising an $H_2S$ containing feedstock and optional diluent gases to obtain a fluidized bed and to conduct the endothermic $H_2S$ splitting reaction on the $H_2S$-containing feedstock,
- optionally, recovering the particles from the reaction zone and recycling them to the heating zone.

In an embodiment the process to perform $H_2S$ splitting reaction, said process comprising the steps of:

a) providing at least one fluidized bed reactor comprising at least two electrodes, a bed comprising particles and a $H_2S$-containing feedstock;
b) putting the particles in a fluidized state to obtain a fluidized bed;
c) heating the fluidized bed to a temperature ranging from 1000°C to 2700°C to conduct the $H_2S$ splitting reaction of the $H_2S$-containing feedstock; and
d) optionally, recovering the cracking products of the reaction;

wherein the step c) of heating the fluidized bed is performed by passing an electric current through the fluidized bed; wherein at least 10 wt.% of the particles based on the total weight of the particles of the bed are electrically conductive particles and have a resistivity ranging from 0.001 Ohm.cm to 500 Ohm.cm at 800°C; wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof; wherein that the at least one fluidized bed reactor provided in step a) comprises a heating zone and a reaction zone, wherein the step c) of heating the fluidized bed to a temperature ranging from 1000°C to 2700°C to conduct the $H_2S$ splitting reaction comprises the following sub-steps:

- pre-heating the fluidized bed to ranging from 400°C and 1000°C by passing upwardly through the particles bed a first gaseous stream having a temperature ranging from 400°C and 1000°C;
- heating the fluidized bed to a temperature ranging from 1000°C to 2700°C by passing an electric current through the heating zone,
- transporting the heated particles from the heating zone to the reaction zone,
- in the reaction zone, putting the heated particles in a fluidized state by passing upwardly through the said bed of the reaction zone a second gaseous stream comprising a $H_2S$-containing feedstock to obtain a fluidized bed and to conduct the $H_2S$ splitting reaction,

- optionally, recovering the particles from the reaction zone and recycling them to the heating zone.

For example, the first gaseous stream comprises the diluent gases that can be one or more selected from steam, nitrogen, argon, helium, or ammonia. For example, the first gaseous stream is different from the second gaseous stream.

For example, the at least one fluidized bed reactor is at least two fluidized bed reactors connected one to each other wherein at least one of said at least two fluidized bed reactors is the heating zone and at least another of said at least two fluidized bed reactors is the reaction zone. With preference, the at least one fluidized bed reactor being the heating zone comprises gravitational or pneumatic transport means to transport the particles from the heating zone to the reaction zone and/or the installation comprises means arranged to inject an $H_2S$-containing feedstock to the at least one fluidized bed reactor being the reaction zone. The installation is devoid of means to inject an $H_2S$-containing feedstock to the at least one fluidized bed reactor being the heating zone.

For example, the at least one fluidized bed reactor is a single fluidized bed reactor wherein the heating zone is the bottom part of the fluidized bed reactor while the reaction zone is the top part of the fluidised bed reactor. With preference, the installation comprises means to inject an $H_2S$-containing feedstock and/or diluent between the two zones. The diameter of the heating zone and reaction zone can be different in order to accomplish optimum conditions for heating in the bottom zone. Particles can move from the heating zone to the reaction zone by entrainment and the other way around from the reaction zone back to the heating zone by gravity. Optionally, particles can be collected from the upper heating zone and transferred by a separate transfer line back to the bottom heating zone.

Step c) provides that the $H_2S$ splitting reaction is performed on an $H_2S$-containing feedstock which implies that an $H_2S$-containing feedstock is provided. It is understood that the $H_2S$-containing feedstock is provided to the reaction zone and that when the heating zone is separated from the reaction zone then, with preference, no $H_2S$-containing feedstock is provided to the heating zone. It is understood that in addition to the $H_2S$-containing feedstock provided to the reaction zone, steam can be provided to the reaction zone to reach the recommended steam to methane ratio in the reaction zone. Preferably, the step b) of putting the particles of the bed in a fluidized state is performed by passing upwardly through the said bed a gaseous stream and when the heating zone and the reaction zone are mixed (i.e. the same zone), the stream provided in step b) is or comprises an $H_2S$-containing feedstock.

**The bed comprising particles**

To achieve the required temperature necessary to carry out the $H_2S$ splitting reaction, at least 10 wt.% of the particles based on the total weight of the particles of the bed are electrically conductive, have a resistivity ranging from 0.001 Ohm.cm to 500 Ohm.cm at 800°C.

The electrically particles of the bed are one or more selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and any mixture thereof.

For example, from 50 wt.% to 100 wt.% of the electrically conductive particles of the bed based on the total weight of the electrically conductive particles of the bed are one or more non-metallic resistors; preferably, from 60 wt.% to 100 wt.%; more preferably from 70 wt.% to 100 wt.%; even more preferably from 80 wt.% to 100 wt.% and most preferably from 90 wt.% to 100 wt.%.

With preference, the electrically conductive particles of the bed are or comprise one or more selected from one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and any mixture thereof; with preference in a content of from 50 wt.% to 100 wt.% based on the total weight of the electrically conductive particles of the bed; preferably, from 60 wt.% to 100 wt.%; more preferably from 70 wt.% to 100 wt.%; even more preferably from 80 wt.% to 100 wt.% and most preferably from 90 wt.% to 100 wt.%.

For example, the electrically conductive particles of the bed are devoid of one or more carbon-containing particles selected from petroleum coke, carbon black, coke or a mixture thereof.

In an embodiment, the electrically conductive particles of the bed are devoid of one or more carbon-containing particles selected from graphite, petroleum coke, carbon black, coke or a mixture thereof. For example, the electrically conductive particles of the bed are devoid of graphite and/or carbon black. For example, the electrically conductive particles of the bed are devoid of petroleum coke and/or coke.

Alternatively, the electrically conductive particles of the bed are or comprise one or more selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and any mixture thereof; with preference in a content of from 50 wt.% to 100 wt.% based on the total weight of the electrically conductive particles of the bed; preferably, from 60 wt.% to 100 wt.%; more preferably from 70 wt.% to 100 wt.%; even more preferably from 80 wt.% to 100 wt.% and most preferably from 90 wt.% to 100 wt.%.

As an alternative, the electrically conductive particles of the bed are one or more particles selected from one or more metallic alloys, one or more non-metallic resistors provided that the non-metallic resistor is not silicon carbide, one or more metallic carbides, one or more transition metal nitrides, one or more metallic phosphides, one or more superionic conductors, one or more phosphate electrolytes, one or more mixed oxides being doped with one or more lower-valent cations and/or one or more and/or mixed sulphides being doped with one or more lower-valent cations and any mixture thereof; with preference in a content of from 50 wt.% to 100 wt.% based on the total weight of the electrically conductive particles of the bed; preferably, from 60 wt.% to 100 wt.%; more preferably from 70 wt.% to 100 wt.%; even more preferably from 80 wt.% to 100 wt.% and most preferably from 90 wt.% to 100 wt.%.

For example, the electrically conductive particles of the bed are or comprise one or more selected from one or more metallic alloys, one or more non-metallic resistors, one or more mixed oxides being doped with one or more lower-valent cations, one or more mixed sulphides being doped with one or more lower-valent cations, and any mixture thereof with preference in a content of from 50 wt.% to 100 wt.% based on the total weight of the electrically conductive particles of the bed; preferably, from 60 wt.% to 100 wt.%; more preferably from 70 wt.% to 100 wt.%; even more preferably from 80 wt.% to 100 wt.% and most preferably from 90 wt.% to 100 wt.%.

For example, the electrically conductive particles of the bed are or comprise one or more selected from one or more non-metallic resistors, one or more mixed oxides being doped with one or more lower-valent cations, one or more mixed sulphides being doped with one or more lower-valent cations, and any mixture thereof; with preference in a content of from 50 wt.% to 100 wt.% based on the total weight of the electrically conductive particles of the bed; preferably, from 60 wt.% to 100 wt.%; more preferably from 70 wt.% to 100 wt.%; even more preferably from 80 wt.% to 100 wt.% and most preferably from 90 wt.% to 100 wt.%.

For example, the content of electrically conductive particles is ranging from 10 wt.% to 100 wt.% based on the total weight of the particles of the bed; preferably, from 15 wt.% to 95 wt.%, more preferably from 20 wt.% to 90 wt.%, even more preferably from 25 wt.% to 80 wt.% and most preferably from 30 wt.% to 75 wt.%.

For example, the content of electrically conductive particles based on the total weight of the bed is at least 12 wt.% based on the total weight of the particles of the bed; preferably, at least 15 wt.%, more preferably, at least 20 wt.%; even more preferably at least 25 wt.%, and most preferably at least 30 wt.% or at least 40 wt.% or at least 50 wt.% or at least 60 wt.%.

For example, the electrically conductive particles have a resistivity ranging from 0.005 to 400 Ohm.cm at 800°C, preferably ranging from 0.01 to 300 Ohm.cm at 800°C; more preferably ranging from 0.05 to 150 Ohm.cm at 800°C and most preferably ranging from 0.1 to 100 Ohm.cm at 800°C.

For example, the electrically conductive particles have a resistivity of at least 0.005 Ohm.cm at 800°C; preferably of at least 0.01 Ohm.cm at 800°C, more preferably of at least 0.05 Ohm.cm at 800°C; even more preferably of at least 0.1 Ohm.cm at 800°C, and most preferably of at least 0.5 Ohm.cm at 800°C.

For example, the electrically conductive particles have a resistivity of at most 400 Ohm.cm at 800°C; preferably of at most 300 Ohm.cm at 800°C, more preferably of at most 200 Ohm.cm at 800°C; even more preferably of at most 150 Ohm.cm at 800°C, and most preferably of at most 100 Ohm.cm at 800°C.

For example, the particles of the bed have an average particle size ranging from 5 to 300 $\mu$m as determined by sieving according to ASTM D4513-11, preferably ranging from 10 to 200 $\mu$m and more preferably ranging from 30 to 150 $\mu$m.

For example, the electrically conductive particles of the bed have an average particle size ranging from 5 to 300 $\mu$m as determined by sieving according to ASTM D4513-11, preferably ranging from 10 to 200 $\mu$m and more preferably ranging from 30 to 150 $\mu$m.

The electrical resistance is measured by a four-probe DC method using an ohmmeter. A densified power sample is shaped in a cylindrical pellet that is placed between the probe electrodes. Resistivity is determined from the measured resistance value, R, by applying the known expression $\rho = R \times A / L$, where L is the distance between the probe electrodes typically a few millimetres and A the electrode area.

The electrically conductive particles of the bed can exhibit electronic, ionic or mixed electronic-ionic conductivity. The ionic bonding of many refractory compounds allows for ionic diffusion and correspondingly, under the influence of an electric field and appropriate temperature conditions, ionic conduction.

The electrical conductivity, $\sigma$, the proportionality constant between the current density j and the electric field E, is given by

$$\sigma = j / E = \sum c_i \times Z_i q \times \mu_i$$

where $c_i$ is the carrier density (number/cm$^3$), $\mu_i$ the mobility (cm$^2$/Vs), and $Z^i q$ the charge (q=1.6 $\times$ 10$^{-19}$ C) of the ith charge carrier. The many orders of magnitude differences in $\sigma$ between metals, semiconductors and insulators generally result from differences in c rather than $\mu$. On the other hand, the higher conductivities of electronic versus ionic conductors are generally due to the much higher mobilities of electronic versus ionic species.

The most common materials that can be used for resistive heating is subdivided into nine groups:

(1) Metallic alloys for temperatures up to 1200-1400°C,
(2) non-metallic resistors like silicon carbide (SiC), molybdenum disilicide (MoSi$_2$), nickel silicide (NiSi), sodium silicide (Na$_2$Si), magnesium silicide (Mg$_2$Si), platinum silicide (PtSi), titanium silicide (TiSi$_2$) and tungsten silicide (WSi$_2$) up to 1600-1900°C,
(3) several mixed oxides and/or mixed sulphides being doped with one or more lower-valent cations with variable temperature optima,
(5) metallic carbides,
(6) transition metal nitrides,
(7) metallic phosphides,
(8) superionic conductors, and
(9) phosphate electrolytes.

A first group of metallic alloys, for temperatures up to 1150-1250°C, can be constituted by Ni-Cr alloys with low Fe content (0.5-2.0 %), preferably alloy Ni-Cr (80 % Ni, 20 % Cr) and (70 % Ni, 30 % Cr). Increasing the content of Cr increases the material resistance to oxidation at high temperatures. A second group of metallic alloys having three components are Fe-Ni-Cr alloys, with maximum operating temperature in an oxidizing atmosphere to 1050-1150°C but which can be conveniently used in reducing atmospheres or Fe-Cr-Al (chemical composition 15-30 % Cr, 2-6 % Al and Fe balance) protecting against corrosion by a surface layer of oxides of Cr and Al, in oxidizing atmospheres can be used up to 1300-1400°C. Silicon carbide as non-metallic resistor can exhibit wide ranges of resistivity that can be controlled by the way they are synthesized and the presence of impurities like aluminium, iron, oxide, nitrogen or extra carbon or silicon resulting in non-stoichiometric silicon carbide. In general silicon carbide has a high resistivity at low temperature but has good resistivity in the range of 500 to 1200°C. In an alternative embodiment, the non-metallic resistor can be devoid of silicon carbide, and/or can comprise molybdenum disilicide (MoSi$_2$), nickel silicide (NiSi), sodium silicide (Na$_2$Si), magnesium silicide (Mg$_2$Si), platinum silicide (PtSi), titanium silicide (TiSi$_2$), tungsten silicide (WSi$_2$) or a mixture thereof.

Graphite has rather low resistivity values, with a negative temperature coefficient up to about 600°C after which the resistivity starts to increase.

Many mixed oxides and/or mixed sulphides being doped with one or more lower-valent cations, having in general too high resistivity at low temperature, become ionic or mixed conductors at high temperature. The following circumstances can make oxides or sulphides sufficient conductors for heating purposes: ionic conduction in solids is described in terms of the creation and motion of atomic defects, notably vacancies and interstitials of which its creation and mobility is very positively dependent on temperature. Such mixed oxides or sulphides are ionic or mixed conductors, namely being doped with one or more lower-valent cations. Three mechanisms for ionic defect formation in oxides are known: (1) Thermally induced intrinsic ionic disorder (such as Schottky and Frenkel defect pairs resulting in non-stoichiometry), (2). Redox-induced defects and (3) Impurity-induced defects. The first two categories of defects are predicted from statistical thermodynamics and the latter form to satisfy electroneutrality. In the latter case, high charge carrier densities can be induced by substituting lower valent cations for the host cations. Mixed oxides and/or mixed sulphides with fluorite, pyrochlore or perovskite structure are very suitable for substitution by one or more lower-valent cations.

Several sublattice disordered oxides or sulphides have high ion transport ability at increasing temperature. These are superionic conductors, such as LiAlSiO$_4$, Li$_{10}$GeP$_2$S$_{12}$, Li$_{3.6}$Si$_{0.6}$P$_{0.4}$O$_4$, NaSICON (sodium (Na) Super Ionic CONductor) with the general formula Na$_{1+x}$Zr$_2$P$_{3-x}$Si$_x$O$_{12}$ with 0 < x < 3, for example Na$_3$Zr$_2$PSi$_2$O$_{12}$ (x = 2), or sodium beta alumina, such as NaAl$_{11}$O$_{17}$, Na$_{1.6}$Al$_{11}$O$_{17.3}$, and/or Na$_{1.76}$Li$_{0.38}$Al$_{10.62}$O$_{17.}$

High concentrations of ionic carriers can be induced in intrinsically insulating solids and creating high defective solids. Thus, the electrically conductive particles of the bed are or comprise one or more mixed oxides being ionic or mixed conductor, namely being doped with one or more lower-valent cations, and/or one or more mixed sulphides being ionic or mixed conductor, namely being doped with one or more lower-valent cations. With preference, the mixed oxides are selected from one or more oxides having a cubic fluorite structure being at least partially substituted with one or more lower-valent cations, preferentially selected from Sm, Gd, Y, Sc, Yb, Mg, Ca, La, Dy, Er, Eu; and/or from one or more ABO$_3$-perovskites with A and B tri-valent cations, being at least partially substituted in A position with one or more lower-valent cations, preferentially selected from Ca, Sr, or Mg, and comprising at least one of Ni, Ga, Co, Cr, Mn, Sc, Fe and/or a mixture thereof in B position; and/or from one or more $ABO_3$-perovskites with A bivalent cation and B tetra-valent cation, being at least partially substituted with one or more lower-valent cations, preferentially selected from Mg, Sc, Y, Nd or Yb in the B position or with a mixture of different B elements in the B position; and/or from one or more $A_2B_2O_7$-pyrochlores with A trivalent cation and B tetra-valent cation being at least partially substituted in A position with one or more lower-valent cations, preferentially selected from Ca or Mg, and comprising at least one of Sn, Zr and Ti in B position.

With preference, the one or more mixed sulphides are selected from one or more sulphides having a cubic fluorite structure being at least partially substituted with one or more lower-valent cations, preferentially selected from Sm, Gd, Y, Sc, Yb, Mg, Ca, La, Dy, Er, Eu; and/or from one or more $ABS_3$ structures with A and B tri-valent cations, being at least partially substituted in A position with one or more lower-valent cations, preferentially selected from Ca, Sr, or Mg, and comprising at least one of Ni, Ga, Co, Cr, Mn, Sc, Fe and/or a mixture thereof in B position; and/or from one or more $ABS_3$ structures with A bivalent cation and B tetra-valent cation, being at least partially substituted with one or more lower-valent cations, preferentially selected from Mg, Sc, Y, Nd or Yb in the B position or with a mixture of different B elements in the B position; and/or from one or more $A_2B_2S_7$ structures with A trivalent cation and B tetra-valent cation being at least partially substituted in A position with one or more lower-valent cations, preferentially selected from Ca or Mg, and comprising at least one of Sn, Zr and Ti in B position.

With preference, the degree of substitution in the one or more mixed oxides doped with one or more lower-valent cations and having a cubic fluorite structure is between 1 and 15 atom % based on the total number of atoms present in the one or more oxides or sulphides having a cubic fluorite structure, in the one or more $ABO_3$-perovskites with A and B tri-valent cations, in the one or more $ABO_3$-perovskites with A bivalent cation and B tetra-valent cation or in the one or more $A_2B_2O_7$-pyrochlores with A trivalent cation and B tetra-valent cation respectively, preferably between 3 and 12 atom %, more preferably between 5 and 10 atom%.

With preference, the degree of substitution in the one or more mixed oxides doped with one or more lower-valent cations is between 1 and 50 atom% based on the total number of atoms present in the one or more $ABO_3$-perovskites with A and B tri-valent cations, in the one or more $ABO_3$-perovskites with A bivalent cation and B tetra-valent cation or in the one or more $A_2B_2O_7$-pyrochlores with A trivalent cation and B tetra-valent cation respectively, preferably between 3 and 20 atom%, more preferably between 5 and 15 atom%.

With preference, the degree of substitution in the one or more mixed sulphides doped with one or more lower-valent cations and having a cubic fluorite structure is between 1 and 15 atom % based on the total number of atoms present in the one or more $ABS_3$ structures with A and B tri-valent cations, in the one or more $ABS_3$ structures with A bivalent cation and B tetra-valent cation or in the one or more $A_2B_2S_7$ structures with A trivalent cation and B tetra-valent cation respectively, preferably between 3 and 12 atom %, more preferably between 5 and 10 atom%.

With preference, the degree of substitution in the one or more mixed sulphides doped with one or more lower-valent cations is between 1 and 50 atom% based on the total number of atoms present in the one or more $ABS_3$ structures with A and B tri-valent cations, in the one or more $ABS_3$ structures with A bivalent cation and B tetra-valent cation or in the one or more $A_2B_2S_7$ structures with A trivalent cation and B tetra-valent cation respectively, preferably between 3 and 20 atom%, more preferably between 5 and 15 atom%.

Said one or more oxides having a cubic fluorite structure, said one or more $ABO_3$-perovskites with A and B tri-valent cations, said one or more $ABO_3$-perovskites with A bivalent cation and B tetra-valent cation or said one or more $A_2B_2O_7$-pyrochlores with A trivalent cation and B tetra-valent cation being at least partially substituted with lower valent cations, said one or more sulphides having a cubic fluorite structure, said one or more $ABS_3$ structures with A and B tri-valent cations, said one or more $ABS_3$ structures with A bivalent cation and B tetra-valent cation, said one or more $A_2B_2S_7$ structures with A trivalent cation and B tetra-valent cation being at least partially substituted with lower valent cations also means that the same element, being a high-valent cation, can be reduced in the lower-valent equivalent, for example, Ti(IV) can be reduced in Ti(III) and/or Co(III) can be reduced in CO(II) and/or Fe(III) can be reduced in Fe(II) and/or Cu(II) can be reduced in Cu(I).

Phosphate electrolytes such as $LiPO_4$ or $LaPO_4$ can also be used as electrically conductive particles.

Metallic carbides, transition metal nitrides and metallic phosphides can also be selected as electrically conductive particles. For example, metallic carbides are selected from iron carbide ($Fe_3C$), molybdenum carbide (such as a mixture of MoC and $Mo_2C$). For example, said one or more transition metal nitrides are selected from zirconium nitride (ZrN), tungsten nitride (such as a mixture of $W_2N$, WN, and $WN_2$), vanadium nitride (VN), tantalum nitride (TaN), and/or niobium nitride (NbN). For example, said one or more metallic phosphides are selected from copper phosphide ($Cu_3P$), indium phosphide (InP), gallium phosphide (GaP), sodium phosphide $Na_3P$), aluminium phosphide (AIP), zinc phosphide ($Zn_3P_2$) and/or calcium phosphide ($Ca_3P_2$).

It is a preferred embodiment of the present disclosure that the electrically conductive particles which exhibit only sufficiently low resistivity at a high temperature can be heated by external means before reaching the high enough temperature where resistive heating with electricity overtakes or can be mixed with a sufficiently low resistivity solid at a low temperature so that the resulting resistivity of the mixture allows to heat the fluidized bed to the desired reaction temperature.

For example, the electrically conductive particles of the bed are or comprise silicon carbide. For example, at least 10 wt.% of the electrically conductive particles based on the total weight of the electrically conductive particles of the bed are silicon carbide particles and have a resistivity ranging from 0.001 Ohm.cm to 500 Ohm.cm at of 800°C.

In the embodiment wherein the electrically conductive particles of the bed are or comprise silicon carbide, the person skilled in the art will have the advantage to conduct a step of pre-heating with a gaseous stream said fluidized bed reactor before conduct said endothermic reaction in the fluidized bed reactor. Advantageously, the gaseous stream is a stream of inert gas, *i.e.,* nitrogen, argon, helium, methane, carbon dioxide, hydrogen or steam. The temperature of the gaseous stream can be at least 500°C, or at least 550°C, or at least 600°C, or at least 650°C, or at least 700°C, or at least 750°C, or at least 800°C, or at least 850°C, or at least 900°C. Advantageously, the temperature of the gaseous stream can be comprised between 500°C and 900°C, for example between 600°C and 800°C or between 650°C and 750°C. Said gaseous stream of inert gas can also be used as the fluidification gas. The pre-heating of the said gaseous stream of inert gas is performed thanks to conventional means, including using electrical energy. The temperature of the gaseous stream used for the pre-heating of the bed does not need to reach the temperature reaction.

Indeed, the resistivity of silicon carbide at ambient temperature is high, to ease the starting of the reaction, it may be useful to heat the fluidized bed by external means, as with preference the fluidized bed reactor is devoid of heating means. Once the bed is heated at the desired temperature, the use of a hot gaseous stream may not be necessary.

However, in an embodiment, the electrically conductive particles of the bed are or comprise a mixture of silicon carbide particles and electrically conductive particles different from silicon carbide particles.

The pre-heating step may be also used in the case wherein electrically conductive particles different from silicon carbide particles are present in the bed. For example, it may be used when the content of silicon carbide in the electrically conductive particles of the bed is more than 80 wt.% based on the total weight of the particles of the bed, for example, more than 85 wt.%, for example, more than 90 wt.%, for example, more than 95 wt.%, for example, more than 98 wt.%, for example, more than 99 wt.%. However, a pre-heating step may be used whatever is the content of silicon carbide particles in the bed.

In the embodiment wherein the electrically conductive particles of the bed are or comprise a mixture of silicon carbide particles and electrically conductive particles different from silicon carbide particles, the electrically conductive particles of the bed may comprise from 10 wt.% to 99 wt.% of silicon carbide particles based on the total weight of the electrically conductive particles of the bed; preferably, from 15 wt.% to 95 wt.%, more preferably from 20 wt.% to 90 wt.%, even more preferably from 25 wt.% to 80 wt.% and most preferably from 30 wt.% to 75 wt.%.

For example, the electrically conductive particles of the bed are or comprise a mixture of silicon carbide particles and electrically conductive particles different from silicon carbide particles and the electrically conductive particles of the bed comprises at least 40 wt.% of silicon carbide particles based on the total weight of the electrically conductive particles of the bed; preferably at least 50 wt.%, more preferably at least 60 wt.%, even more preferably at least 70 wt.% and most preferably at least 80 wt.%.

In an embodiment, the electrically conductive particles of the bed may comprise from 10 wt.% to 90 wt.% of electrically conductive particles different from silicon carbide particles based on the total weight of the electrically conductive particles of the bed; preferably, from 15 wt.% to 95 wt.%, more preferably from 20 wt.% to 90 wt.%, even more preferably from 25 wt.% to 80 wt.% and most preferably from 30 wt.% to 75 wt.%.

However, it may be interesting to keep the content of electrically conductive particles different from silicon carbide particles quite low in the mixture. Thus, in an embodiment, the electrically conductive particles of the bed are or comprise a mixture of silicon carbide particles and electrically conductive particles different from silicon carbide particles and electrically conductive particles of the bed comprises from 1 wt.% to 20 wt.% of electrically conductive particles different from silicon carbide based on the total weight of the electrically conductive particles of the bed; preferably, from 2 wt.% to 15 wt.%, more preferably, from 3 wt.% to 10 wt.%, and even more preferably, from 4 wt.% to 8 wt.%.

For example, the electrically conductive particles of the bed are or comprise a mixture of silicon carbide particles and particles different from silicon carbide particles and the said particles different from silicon carbide particles are or comprise molybdenum silicide particles.

Thus, in an embodiment, the electrically conductive particles are a combination of silicon carbide particles and molybdenum silicide particles. Such electrically conductive particles, upon the electrification of the fluidized bed reactor, will heat up and because of their fluidification, will contribute to the raise and/or to the maintaining of the temperature within the reactor.

For example, molybdenum silicide can be molybdenum silicide graphite. It is also preferable that the molybdenum silicide has an average particle size ranging from 1 to 400 $\mu$m as determined by sieving according to ASTM D4513-11, preferably from 5 to 300 $\mu$m, more preferably ranging from 10 to 200 $\mu$m and most preferably ranging from 30 to 150 $\mu$m.

17

## The silicon carbide particles

For example, the silicon carbide is selected from sintered silicon carbide, nitride-bounded silicon carbide, recrystallised silicon carbide, reaction bonded silicon carbide and any mixture thereof.

Sintered SiC (SSiC) is a self-bonded material containing a sintering aid (typically boron) of less than 1% by weight.

Recrystallized silicon carbide (RSiC), a high purity SiC material sintered by the process of evaporation - condensation without any additives.

Nitride-bonded silicon carbide (NBSC) is made by adding fine silicon powder with silicon carbide particles or eventually in the presence of a mineral additive and sintering in a nitrogen furnace. The silicon carbide is bonded by the silicon nitride phase ($Si_3N_4$) formed during nitriding.

Reaction bonded silicon carbide (RBSC), also known as siliconized silicon carbide or SiSiC, is a type of silicon carbide that is manufactured by a chemical reaction between porous carbon or graphite with molten silicon. The silicon reacts with the carbon forming silicon carbide and bonds the silicon carbide particles. Any excess silicon fills the remaining pores in the body and produces a dense SiC-Si composite. Due to the left-over traces of silicon, reaction bonded silicon carbide is often referred to as siliconized silicon carbide. The process is known variously as reaction bonding, reaction sintering, self-bonding, or melt infiltration.

In general, high purity SiC particles have resistivity above 1000 Ohm.cm, whereas sintered, reaction bonded and nitride-bonded can exhibit resistivities of about 100 to 1000 depending on the impurities in the SiC phase. Electrical resistivity of bulk polycrystalline SiC ceramics shows a wide range of resistivity depending on the sintering additive and heat-treatment conditions (Journal of the European Ceramic Society, Volume 35, Issue 15, December 2015, Pages 4137; Ceramics International, Volume 46, Issue 4, March 2020, Pages 5454). SiC polytypes with high purity possess high electrical resistivity ($>10^6$ $\Omega$.cm) because of their large bandgap energies. However, the electrical resistivity of SiC is affected by doping impurities. N and P act as n-type dopants and decrease the resistivity of SiC, whereas Al, B, Ga, and Sc act as p-type dopants. SiC doped with Be, O, and V are highly insulating. N is considered the most efficient dopant for improving the electrical conductivity of SiC. For N doping of SiC (to decrease resistivity) $Y_2O_3$ and $Y_2O_3$-$REM_2O_3$ (REM, rare earth metal = Sm, Gd, Lu) have been used as sintering additives for efficient growth of conductive SiC grains containing N donors. N-doping in SiC grains was promoted by the addition of nitrides (AlN, BN, $Si_3N_4$, TiN, and ZrN) or combinations of nitrides and $Re_2O_3$ (AlN-$REM_2O_3$ (REM = Sc, Nd, Eu, Gd, Ho, and Er) or TiN-$Y_2O_3$).

## The installation

The terms "bottom" and "top" are to be understood in relation to the general orientation of the installation or the fluidized bed reactor. Thus, "bottom" will mean greater ground proximity than "top" along the vertical axis. In the different figures, the same references designate identical or similar elements.

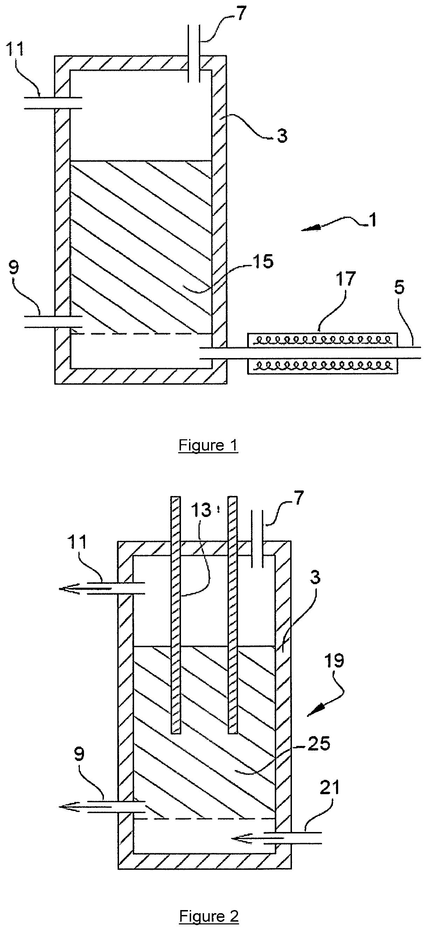

Figure 1 illustrates a prior art fluidized bed reactor 1 comprising a reactor vessel 3, a bottom fluid nozzle 5 for the introduction of a fluidizing gas and an $H_2S$-containing feedstock, an optional inlet 7 for the material loading, an optional outlet 9 for the material discharge and a gas outlet 11 and a bed 15. In the fluidized bed reactor 1 of figure 1 the heat is provided by pre-heating the feedstock by combustion of fossil fuels using heating means 17 arranged for example at the level of the line that provides the reactor with the fluidizing gas and the $H_2S$-containing feedstock.

The installation of the present disclosure is now described with reference to figures 2 to 5. For sake of simplicity, internal devices are known by the person in the art that are used in fluidized bed reactors, like bubble breakers, deflectors, particle termination devices, cyclones, ceramic wall coatings, thermocouples, etc... are not shown in the illustrations.

Figure 2 illustrates a first installation with a fluidized bed reactor 19 where the heating and reaction zone are the same. The fluidized bed reactor 19 comprises a reactor vessel 3, a bottom fluid nozzle 21 for the introduction of a fluidizing gas and an $H_2S$-containing feedstock, an optional inlet 7 for the material loading, an optional outlet 9 for the material discharge and a gas outlet 11. The fluidized bed reactor 1 of figure 2 shows two electrodes 13 submerged in bed 25.

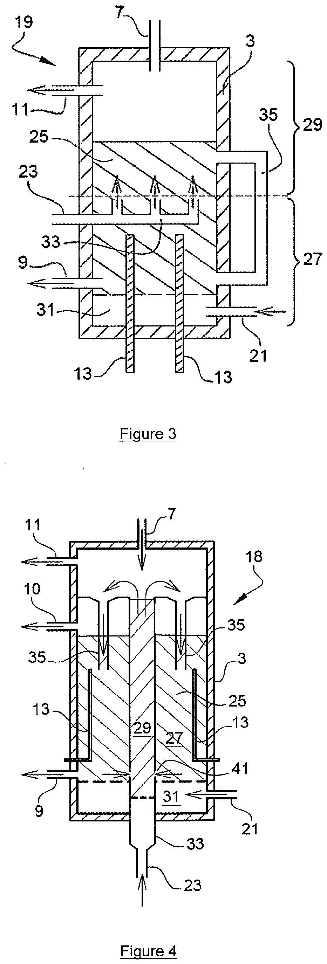

Figure 3 illustrates an embodiment wherein at least one fluidized bed reactor 19 comprises a heating zone 27 and a reaction zone 29 with the heating zone 27 is the bottom zone and the reaction zone 29 is on top of the heating zone 27. One or more fluid nozzles 23 to provide an H2S-containing feedstock to the reaction zone from a distributor 33. As it can be seen in figure 3, the one or more fluid nozzles 23 can be connected to a distributor 33 to distribute the $H_2S$-containing feedstock inside the bed 25.

Figure 4 illustrates an installation wherein at least one fluidized bed reactor 18 comprises at least two lateral zones with the outer zone being the heating zone 27 and the inner zone being the reaction zone 29. The heated particles of the bed 25 from the outer zone are transferred to the inner zone by one or more openings 41 and mixed with the $H_2S$-containing feedstock and/or steam. At the end of the reaction zone the particles are separated from the reaction product and transferred to the heating zone.

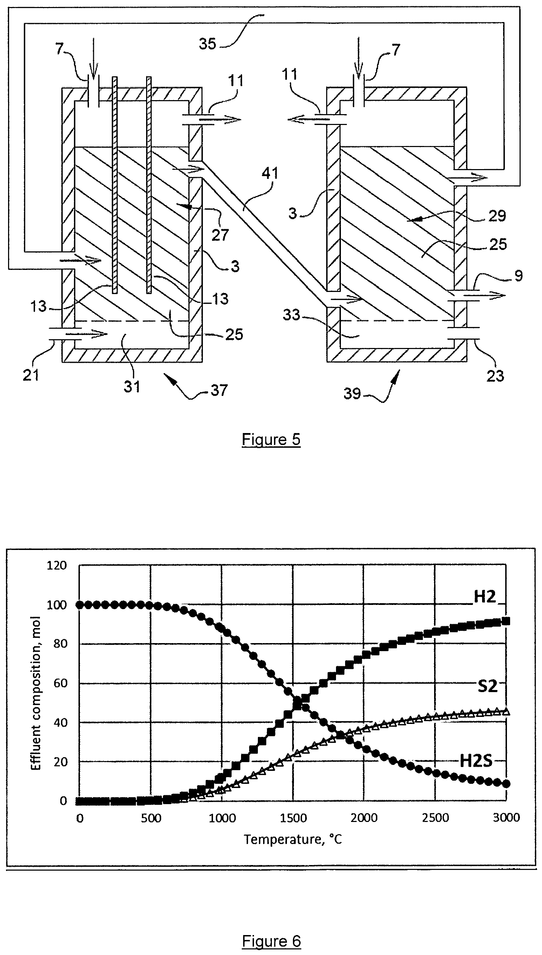

Figure 5 illustrates the installation that comprises at least two fluidized bed reactors (37, 39) connected one to each other wherein at least one fluidized bed reactor is the heating zone 27 and one at least one fluidized bed reactor is the reaction zone 29.

The present disclosure provides for an installation to be used in a process to perform an $H_2S$ splitting reaction with production of $H_2$, said installation comprises at least one fluidized bed reactor (18, 19, 37, 39) comprising:

- at least two electrodes 13,
- a reactor vessel 3;
- one or more fluid nozzles (21, 23) for the introduction of a fluidizing gas and/or of an $H_2S$-containing feedstock within at least one fluidized bed reactor (18, 19, 37, 39); and
- a bed 25 comprising particles;

wherein at least 10 wt.% of the particles of the bed based on the total weight of the particles of the bed 25 are electrically conductive, have a resistivity ranging from 0.001 Ohm.cm to 500 Ohm.cm at 800°C; wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof; and wherein at least two electrodes (13) comprise or are made of tantalum; with preference, said at least one fluidized bed reactor (18, 19, 37, 39) is devoid of heating means located around or inside the reactor vessel (3) wherein the heating means are selected from ovens, gas burners, hot plates, or any combination thereof.

For example, the electrically conductive particles of the bed are one or more non-metallic resistors and one or more one or more selected from one or more metallic alloys, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and any mixture thereof.

For example, the electrically conductive particles of the bed are or comprise one or more selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and any mixture thereof.

For example, one electrode is a submerged central electrode or two electrodes 13 are submerged within the reactor vessel 3 of at least one reactor (18, 19, 37).

For example, the step b) of putting the particles of the bed in a fluidized state is preferably performed by passing upwardly through the said bed a gaseous stream and the gaseous gas used in step b) as fluidizing gas is or comprises one or more diluent gases.

In a preferred embodiment, the at least one fluidized bed reactor (18, 19, 37, 39) is devoid of heating means. For example, at least one fluidized bed reactor is devoid of heating means selected from ovens, gas burners, hot plates, or any combination thereof. For example, all the fluidized bed reactors are devoid of heating means selected from ovens, gas burners, hot plates, or any combination thereof. In a preferred embodiment, the at least one fluidized bed reactor comprising at least two electrodes and a bed comprising particles is devoid of packing.

For example, the reactor vessel 3 has an inner diameter of at least 100 cm, or at least 200 cm; or at least 400 cm. Such a large diameter allows to carry out the chemical reaction at an industrial scale.

The at least one fluidized bed reactor (18, 19, 37) comprises at least two electrodes 13. For example, one electrode is in electrical connection with the outer wall of the fluidized bed reactor, while one additional electrode is submerged into the fluidized bed 25, or both electrodes 13 are submerged into the fluidized bed 25. Said at least two electrodes 13 are electrically connected and can be connected to a power supply (not shown). It is advantageous that said at least two electrodes 13 comprise or are made of tantalum. The person skilled in the art will have an advantage that the electrodes 13 are more conductive than the particle bed 25.

For example, at least one electrode 13 is made of or comprises tantalum; preferably, all or the two electrodes 13 are made of tantalum. For example, one of the electrodes is the reactor vessel, so that the reactor comprises two electrodes, one being the submerged central electrode and one being the reactor vessel 3.

For example, the at least one fluidized bed reactor comprises at least one cooling device arranged to cool at least one electrode.

During use of the fluidized bed reactor, an electric potential of at most 300 V is applied, preferably at most 250 V, more preferably at most 200 V, even more preferably at most 150 V, most preferably at most 100 V, even most preferably at most 90 V, or at most 80 V.

Thanks to the fact that the power of the electric current can be tuned, it is easy to adjust the temperature within the reactor bed.

The reactor vessel 3 can be made of ceramics. In an embodiment, it can be made of electro-resistive material that is silicon carbide or a silicon carbide.

With preference, the reactor vessel 3 comprises a reactor wall made of materials that are corrosion-resistant materials and advantageously said reactor wall materials comprise nickel (Ni), SiAlON ceramics, yttria-stabilized zirconia (YSZ), tetragonal polycrystalline zirconia (TZP) and/or tetragonal zirconia polycrystal (TPZ). SiAlON ceramics are ceramics based on the elements silicon (Si), aluminium (Al), oxygen (O) and nitrogen (N). They are solid solutions of silicon nitride ($Si_3N_4$), where Si-N bonds are partly replaced with Al-N and Al-O bonds.

For example, the reactor vessel 3 is made of an electro-resistive material that is a f silicon carbide; and the electro-resistive material of the reactor vessel 3 comprises from 10 wt.% to 99 wt.% of silicon carbide based on the total weight of the electro-resistive material; preferably, from 15 wt.% to 95 wt.%, more preferably from 20 wt.% to 90 wt.%, even more preferably from 25 wt.% to 80 wt.% and most preferably from 30 wt.% to 75 wt.%.

For example, the reactor vessel 3 is made of an electro-resistive material that is silicon carbide.

For example, the reactor vessel 3 is not conductive. For example, the reactor vessel 3 is made of ceramic.

For example, the at least one fluidized bed reactor (18, 19, 37, 39) comprises a heating zone 27 and a reaction zone 29, one or more fluid nozzles 21 to provide a gaseous stream used as fluidizing gas to at least the heating zone from a distributor 31, one or more fluid nozzles 23 to provide an $H_2S$-containing feedstock to the reaction zone from a distributor 33, and means 41 to transport the particles from the heating zone 27 to the reaction zone 29 when necessary, and optional means 35 to transport the particles from the reaction zone 29 back to the heating zone 27.

For example, as illustrated in figure 3, the at least one fluidized bed reactor is a single one fluidized bed reactor 19 wherein the heating zone 27 is the bottom part of the fluidized bed reactor 19 while the reaction zone 29 is the top part of the fluidised bed reactor 19; with preference, the installation comprises one or more fluid nozzles 23 to inject an $H_2S$-containing feedstock between the two zones (27, 29) or in the reaction zone 29. The fluidized bed reactor 19 further comprises optionally an inlet 7 for the material loading, optionally an outlet 9 for the material discharge and a gas outlet 11. With preference, the fluidized bed reactor 19 is devoid of heating means. For example, the electrodes 13 are arranged at the bottom part of the fluidized bed reactor 19, i.e., in the heating zone 27. For example, the top part of the fluidised bed reactor 19, i.e., the reaction zone 29, is devoid of electrodes. Optionally, the fluidized bed reactor 19 comprises means 35 to transport the particles from the reaction zone 29 back to the heating zone 27; such as by means of a line arranged between the top part and the bottom part of the fluidized bed reactor 19.

For example, as illustrated in figure 4, the installation comprises at least two lateral fluidized bed zones (27, 29) connected one to each other wherein at least one fluidized bed zone 27 is the heating zone and at least one fluidized bed zone 29 is the reaction zone. For example, the heating zone 27 is surrounding the reaction zone 29. With preference, the installation comprises one or more fluid nozzles 23 arranged to inject an $H_2S$-containing feedstock and/or steam to the at least one reaction zone 29 by means of a distributor 33. The fluidized bed zones (27, 29) further comprise optionally an inlet 7 for the material loading and a gas outlet 11. With preference, the at least one fluidized bed zone being the heating zone 27 and/or the at least one fluidized bed zone being the reaction zone 29 is devoid of heating means. For example, the at least one fluidized bed zone being the reaction zone 29 shows optionally an outlet 9 for the material discharge. One or more fluid nozzles 21 provide a fluidizing gas to at least the heating zone from a distributor 31. With one or more inlet devices 41, heated particles are transported from the heating zone 27 to the reaction zone 29, and with one or more means 35 comprising downcomers, the separated particles are transported from the reaction zone 29 back to the heating zone 27. The fluidization gas for the heating zone 27 can be an inert diluent, like one or more selected from steam, hydrogen, carbon dioxide, methane, argon, helium and nitrogen. In such a configuration the fluidization gas for the heating zone can also comprise air or oxygen to burn deposited coke from the particles.

For example, as illustrated in figure 5, the installation comprises at least two fluidized bed reactors (37, 39) connected one to each other wherein at least one fluidized bed reactor 37 is the heating zone 27 and at least one fluidized bed reactor 39 is the reaction zone 29. With preference, the installation comprises one or more fluid nozzles 23 arranged to inject an $H_2S$-containing feedstock and/or steam to the at least one fluidized bed reactor 39 being the reaction zone 29. The fluidized bed reactors (37, 39) further comprise optionally an inlet 7 for the material loading and a gas outlet 11. With preference, the at least one fluidized bed reactor 37 being the heating zone 27 and/or the at least one fluidized bed reactor 39 being the reaction zone 29 is devoid of heating means. For example, the at least one fluidized bed reactor 39 being the reaction zone 29 shows optionally an outlet 9 for the material discharge. By means of the inlet device 41, heated particles are transported from the heating zone 27 to the reaction zone 29 when necessary, and by means of device 35, the separated particles after the reaction zone are transported from the reaction zone back to the heating zone. The fluidization gas for the heating zone can be an inert diluent, like one or more selected from steam, hydrogen, carbon dioxide, methane, argon, helium, and nitrogen. In such a configuration the fluidization gas for the heating zone can also comprise air or oxygen to burn deposited coke from the particles.

For example, the at least one fluidized bed reactor 37 being the heating zone 27 comprises at least two electrodes 13 whereas the at least one fluidized bed reactor 39 being the reaction zone 29 is devoid of electrodes.

For example, the at least two fluidized bed reactors (37, 39) are connected one to each other by means 41 suitable to transport the particles from the heating zone 27 to the reaction zone 29, such as one or more lines.

For example, the at least two fluidized bed reactors (37, 39) are connected one to each other by means 35 suitable to transport the particles from the reaction zone 29 back to the heating zone 27, such as one or more lines.

### The H₂S splitting reaction

As shown on figure 6, the splitting of $H_2S$ into hydrogen and disulfide (according to equation 3) occurs between 1000°C and 2700°C.

In one embodiment, the $H_2S$ splitting reaction does not require any catalytic composition. For example, the said $H_2S$ splitting reaction is conducted at a temperature ranging between 800°C and 3000°C, preferably between 1000°C and 2700°C.

For example, the said $H_2S$ splitting reaction is performed at a pressure ranging between 0.10 MPa and 3.00 MPa, preferably between 0.20 MPa and 2.00 MPa.

The residence time of the $H_2S$-containing feedstock in the fluidised bed section of the reactor where the temperature is between 1000 and 2700°C, may advantageously range from 0.05 to 5.0 seconds, preferably from 0.10 to 1.2 seconds, more preferably from 0.15 to 0.8 seconds.

### Claims

**1.** A process to perform an $H_2S$ splitting reaction with production of $H_2$, said process comprising the steps of:

    a) providing at least one fluidized bed reactor comprising at least two electrodes, a bed comprising particles and a $H_2S$-containing feedstock;
    b) putting the particles of the bed in a fluidized state to obtain a fluidized bed;
    c) heating the fluidized bed to a temperature ranging from 1000°C to 2700°C to conduct the $H_2S$ splitting reaction of the $H_2S$-containing feedstock; and
    d) optionally, recovering the products of the reaction;

    **characterized in that** the step c) of heating the fluidized bed is performed by passing an electric current through the fluidized bed and **in that** at least 10 wt.% of the particles based on the total weight of the particles of the bed are electrically conductive particles and have a resistivity ranging from 0.001 Ohm.cm to 500 Ohm.cm at 800°C and wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof.

**2.** The process according to claim 1, **characterized in that** the content of electrically conductive particles is ranging from 25 wt.% to 80 wt.% based on the total weight of the particles of the bed.

**3.** The process according to claim 1 or 2, **characterized in that** the electrically conductive particles of the bed comprise one or more non-metallic resistors selected from silicon carbide (SiC), molybdenum disilicide ($MoSi_2$), nickel silicide (NiSi), sodium silicide ($Na_2Si$), magnesium silicide ($Mg_2Si$), platinum silicide (PtSi), titanium silicide ($TiSi_2$), tungsten silicide ($WSi_2$) or a mixture thereof; and/or **in that** from 50 wt.% to 100 wt.% of the electrically conductive particles of the bed based on the total weight of the electrically conductive particles of the bed are one or more non-metallic resistors.

**4.** The process according to any one of claims 1 to 3, **characterized in that** the electrically conductive particles of the bed comprise a mixture of a non-metallic resistor being silicon carbide and electrically conductive particles different from silicon carbide; with preference:

    - the electrically conductive particles of the bed comprise from 10 wt.% to 99 wt.% of silicon carbide based on the total weight of the electrically conductive particles of the bed; and/or
    - the said electrically conductive particles different from silicon carbide are one or more selected from molybdenum disilicide, one or more mixed oxides being doped with one or more lower-valent cations, one or more mixed sulphides being doped with one or more lower-valent cations and any mixture thereof.

5. The process according to any one of claims 1 to 4, **characterized in that** the electrically conductive particles of the bed comprise one or more mixed oxides being doped with one or more lower-valent cations; with preference, the mixed oxides are selected from:

- one or more oxides having a cubic fluorite structure being at least partially substituted with one or more lower-valent cations, preferentially selected from Sm, Gd, Y, Sc, Yb, Mg, Ca, La, Dy, Er, Eu; and/or
- one or more $ABO_3$-perovskites with A and B tri-valent cations, being at least partially substituted in A position with one or more lower-valent cations, preferentially selected from Ca, Sr, or Mg, and comprising at least one of Ni, Ga, Co, Cr, Mn, Sc, Fe and/or a mixture thereof in B position; and/or
- one or more $ABO_3$-perovskites with A bivalent cation and B tetra-valent cation, being at least partially substituted with one or more lower-valent cations, preferably selected from Mg, Sc, Y, Nd or Yb in the B position or with a mixture of different B elements in the B position; and/or
- one or more $A_2B_2O_7$-pyrochlores with A trivalent cation and B tetra-valent cation being at least partially substituted in A position with one or more lower-valent cations, preferentially selected from Ca or Mg, and comprising at least one of Sn, Zr and Ti in B position.

6. The process according to any one of claims 1 to 5, **characterized in that** the electrically conductive particles of the bed comprise

- one or more metallic alloys; and/or
- one or more superionic conductors; with preference, one or more superionic conductors are selected from $LiAlSiO_4$, $Li_{10}GeP_2S_{12}$, $Li_{3.6}Si_{0.6}P_{0.4}O_4$, sodium superionic conductors, or sodium beta alumina.

7. The process according to any one of claims 1 to 6, **characterized in that** the $H_2S$ splitting reaction is conducted at a temperature ranging from 1300°C to 2200°C and/or the electrically conductive particles of the bed comprise silicon carbide and molybdenum disilicide with from 10 wt.% to 90 wt.% of silicon carbide and from 90 wt.% to 10 wt.% of molybdenum disilicide, both based on the total weight of the electrically conductive particles of the bed.

8. The process according to any one of claims 1 to 7, **characterized in that** in step b) the particles of the bed are put in a fluidized state by passing upwardly through the said bed a gaseous stream wherein the gaseous stream is or comprises the $H_2S$-containing feedstock.

9. The process according to any one of claims 1 to 8, **characterized in that** process comprises a step of pre-heating with a gaseous stream the one or more fluidized bed reactors before conducting the $H_2S$ splitting reaction in the fluidized bed reactor, wherein the gaseous stream has a temperature comprised between 400°C and 1500°C.

10. The process according to any one of claims 1 to 9, **characterized in that** the $H_2S$-containing feedstock is selected from an effluent of amine wash from natural gas sweetening process and/or a stream from cold low-pressure separator after hydrotreatment unit on a refinery.

11. The process according to any one of claims 1 to 10, **characterized in that** the at least one fluidized bed reactor provided in step a) comprises a heating zone and a reaction zone and wherein the step c) of heating the fluidized bed to a temperature ranging from 1000°C to 2700°C to conduct the $H_2S$ splitting reaction comprises the following sub-steps:

- heating the fluidized bed to a temperature ranging from 1000°C to 2700°C by passing an electric current through the heating zone of the at least one fluidized bed,
- transporting the heated particles from the heating zone to the reaction zone,
- in the reaction zone, putting the heated particles in a fluidized state by passing upwardly through the said bed of the reaction zone a stream comprising a $H_2S$-containing feedstock to obtain a fluidized bed and to conduct the $H_2S$ splitting reaction,
- optionally, recovering the particles from the reaction zone and recycling them to the heating zone.

12. The process according to any one of claims 1 to 10, **characterized in that** the at least one fluidized bed reactor provided in step a) comprises a heating zone and a reaction zone, wherein the step c) of heating the fluidized bed to a temperature ranging from 1000°C to 2700°C to conduct the $H_2S$ splitting reaction comprises the following sub-steps:

- pre-heating the fluidized bed to ranging from 400°C and 1000°C by passing upwardly through the particles bed a gaseous stream having a temperature ranging from 400°C and 1000°C;
- heating the fluidized bed to a temperature ranging from 1000°C to 2700°C by passing an electric current through the heating zone,
- transporting the heated particles from the heating zone to the reaction zone,
- in the reaction zone, putting the heated particles in a fluidized state by passing upwardly through the said bed of the reaction zone a stream comprising a $H_2S$ feedstock to obtain a fluidized bed and to conduct the $H_2S$ splitting reaction,
- optionally, recovering the particles from the reaction zone and recycling them to the heating zone

13. An installation to perform an $H_2S$ splitting reaction with production of $H_2$, according to any one of claim 1 to 12; wherein said installation comprises at least one fluidized bed reactor (18, 19, 37, 39) comprising:

- at least two electrodes (13):
- a reactor vessel (3);
- one or more fluid nozzles (21, 23) for the introduction of an $H_2S$-containing feedstock and an optional further gaseous stream within said at least one fluidized bed reactor (18, 19, 37, 39); and
- a bed (25) comprising particles;

the installation is **characterized in that** at least 10 wt.% of the particles of the bed based on the total weight of the particles of the bed are electrically conductive and have a resistivity ranging from 0.001 Ohm.cm to 500 Ohm.cm at a temperature of 800°C. wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof; and **in that** the at least two electrodes (13) comprise or are made of tantalum; with preference, said at least one fluidized bed reactor (18, 19, 37, 39) is devoid of heating means located around or inside the reactor vessel (3) wherein the heating means are selected from ovens, gas burners, hot plates, or any combination thereof.

14. Use of a bed (25) comprising particles in at least one fluidized bed reactor (18, 19, 37, 39) to perform a process of $H_2S$ splitting with production of $H_2$ according to any one of claims 1 to 12, the use is **characterized in that** at least 10 wt.% of the particles of the bed (25) based on the total weight of the particles of the bed are electrically conductive and have a resistivity ranging from 0.001 Ohm.cm to 500 Ohm.cm at 800°C and wherein the electrically conductive particles are selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof.

15. The use of an installation comprising at least one fluidized bed reactor (18, 19, 37, 39) to perform an $H_2S$ splitting reaction, **characterized in that** the installation is according to claim 13.

Figure 1

Figure 2

Figure 3

Figure 4

Figure 5

Figure 6

Europäisches
Patentamt

European
Patent Office

Office européen
des brevets

# EUROPEAN SEARCH REPORT

Application Number

EP 21 31 5246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2022/023365 A1 (TOTALENERGIES SE [FR]) 3 February 2022 (2022-02-03) * claims 28,30 * | 13 | INV. C01B3/04 B01J8/18 B01J8/26 |
| A | US 4 439 412 A (BEHIE LEO A [CA] ET AL) 27 March 1984 (1984-03-27) * column 2, line 35 – column 3, line 2; figures 2,4 * * column 4, lines 25-61 * * column 5, lines 14-38 * | 1-15 | C01B17/04 C25B11/093 B01J6/00 |
| A | GB 1 012 284 A (SHAWINIGAN CHEM LTD) 8 December 1965 (1965-12-08) * the whole document * | 1-15 | |

TECHNICAL FIELDS
SEARCHED      (IPC)

C01B
B01J
C25B

The present search report has been drawn up for all claims

| Place of search | Date of completion of the search | Examiner |
|---|---|---|
| Munich | 25 April 2022 | Werner, Håkan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## EP 4 183 741 A1

### ANNEX TO THE EUROPEAN SEARCH REPORT
### ON EUROPEAN PATENT APPLICATION NO.

EP 21 31 5246

25-04-2022

| Patent document cited in search report | | Publication date | Patent family member(s) | | Publication date |
|---|---|---|---|---|---|
| WO 2022023365 | A1 | 03-02-2022 | NONE | | |
| US 4439412 | A | 27-03-1984 | CA | 1134596 A | 02-11-1982 |
| | | | DE | 3224870 A1 | 11-08-1983 |
| | | | FR | 2508886 A1 | 07-01-1983 |
| | | | US | 4439412 A | 27-03-1984 |
| GB 1012284 | A | 08-12-1965 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *International Journal of Hydrogen Energy,* January 1995, vol. 20 (1), 21-28
- *International Journal of Hydrogen Energy,* 1982, vol. 7 (6), 471-475
- *Annual Technical Meeting of Petrochemical Society (PETSOC), Calgary, Alberta,* June 1995

- *Journal of the European Ceramic Society,* December 2015, vol. 35 (15), 4137
- *Ceramics International,* March 2020, vol. 46 (4), 5454